# EUROPEAN PATENT SPECIFICATION

(11) **EP 4 499 774 B1**
(45) Date of publication and mention of the grant of the patent: **25.02.2026**
(21) Application number: 23715082.6
(22) Date of filing: 24.03.2023
(51) Int. Cl.: C09K 5/10

(54) **HEAT-TRANSFER FLUID WITH LOW ELECTRICAL CONDUCTIVITY**
WÄRMEÜBERTRAGUNGSFLÜSSIGKEIT MIT NIEDRIGER ELEKTRISCHER LEITFÄHIGKEIT
DE FLUIDE DE TRANSFERT DE CHALEUR À FAIBLE CONDUCTIVITÉ ÉLECTRIQUE

(30) Priority: 25.03.2022 EP 22164378
(43) Date of publication of application: 05.02.2025
(73) Proprietor: Arteco NV, 2900 Schoten (BE)
(72) Inventor: CLERICK, Sander, 9051 Gent (BE)
(74) Representative: Nederlandsch Octrooibureau
(86) International application number: PCT/EP2023/057645
(87) International publication number: WO 2023/180531

(56) References cited:
- US-A1- 2007 096 054
- US-A1- 2014 061 529
- US-A1- 2017 009 120

## Description

### FIELD OF THE INVENTION

The present invention relates to heat-transfer fluids with low electrical conductivity which are useful for diverse applications, including new energy vehicles, battery electric and fuel cell electric vehicles. The invention further relates to methods for the preparation of said heat-transfer fluids, and to the methods and uses employing said heat-transfer fluids.

### BACKGROUND ART

Heat-transfer fluids are widely employed in heat exchange systems associated with internal combustion engines, solar systems, fuel cells, electrical motors, generators, electronic equipment, battery equipment, and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. The additives present in heat-transfer fluids may be employed to obtain a variety of functionalities, such as (further) lowering of the freezing point, improving the heat-exchange properties, inhibiting corrosion, et cetera. Since heat-transfer fluids are in continuous contact with metal parts (aluminium alloys, cast iron, steel, copper, brass, solder, et cetera) they nearly always contain one or more corrosion inhibitors.

The development and increased use of alternative energy technologies, such as battery electric or fuel cell electric vehicles and power plants, which are an attractive alternative to combustion engines due to their relatively low output of pollutants, brings with it the need for a new type of heat-transfer fluids.

Fuel cells are electrochemical cells in which the chemical energy stored is converted to electrical energy by controlled oxidation of the fuel. In most applications, several electrochemical cells are stacked together in series into a so-called fuel cell stack, allowing higher voltages to be generated. Heat generated by the fuel cell stack can be removed by flowing heat-transfer fluid through channels formed by the bipolar plates.

The potential difference between the positive and negative ends of the fuel cell stack may cause a shunt current to flow through the heat-transfer fluid, thus reducing the voltage of the fuel cell. In addition to the deleterious loss of voltage, shunt currents cause additional problems, such as corrosion of the separator plate near the positive end of a fuel cell stack.

Batteries are electrochemical cells in which the chemical energy stored is converted to electrical energy by redox reactions. In most applications, several electrochemical cells are placed together in series into a so-called battery pack, allowing higher voltages to be generated. Heat generated by the battery pack can be removed by flowing heat-transfer fluid through channels within, or outside the battery pack.

In case of contact between the heat transfer fluid and the current collectors (tabs) of the battery pack, safety critical events like short-circuits or electrolysis (leading to formation of flammable hydrogen gas) may occur.

In electrical machines such as electromotors, the heat transfer fluid may come in contact with current carrying parts, like copper windings. In such cases, power loss or short-circuit could lead to failure of the device.

Hence, heat-transfer fluids for use in electrical applications, such as battery and fuel cells, need to have low electrical conductivity (i.e. high electrical resistance) and should be capable of maintaining this throughout the lifetime of the heat-transfer fluid.

Most known heat-transfer fluids (e.g. coolants) have been specifically designed for internal combustion engines and are not suitable for use in electrical applications, such as fuel cells, batteries, electrical machines or power electronics, because they (i) possess high electrical conductivity, or (ii) become significantly more electrically conductive upon aging, especially at increased temperatures. The increase in electrical conductivity upon aging is generally attributed to the formation of ionic compounds due to degradation of alcohols, particularly glycols, which are often used as a base fluid, due to degradation of additives, due to metal corrosion and/or due to impurities in the cooling circuit.

Hence, in recent years there has been an increased interest in developing heat-transfer fluids which are suitable for use in electrical applications, such as fuel cells, batteries, electrical machines or power electronics.

EP1485444B1 describes an aqueous heat-transfer fluid with a low electrical conductivity for use in a fuel cell comprising a water-soluble alcoholic anti-freeze agent; a triazole; an amine and/or amine phosphate.

US2005/0109979A1 describes a heat-transfer fluid for electric vehicles comprising a base agent and an anti-corrosive additive being an amide compound, an imide compound or an azole compound which suppresses oxidation of the base agent or blocks ions from eluting into the cooling system, thereby lowering increases in the electrical conductivity of the heat-transfer fluid.

EP1739775B1 describes a heat-transfer fluid comprising a base agent and an anticorrosive additive which is a sugar alcohol and which inhibits oxidation of the base agent and lowers increase of the electric conductivity.

US7201982B2 describes fuel cell coolant compositions with a low electrical conductivity comprising one or more carboxylic acids or salts thereof.

US2017/009120A1 describes heat-transfer fluids for preventing corrosion in heat-transfer systems comprising H₃PO₄, divalent metal cations and polyelectrolyte polymers.

US2014/061529A1 describes nitrite-containing coolant formulations that provide corrosion protection for metals.

The known heat-transfer fluids which are capable of maintaining low electrical conductivity have several disadvantages. They rely for example on the presence of additives which may be expensive, toxic or have other undesirable properties. Furthermore, since the additives employed in the art to maintain low electrical conductivity are often consumed in the process, large amounts of additive are required for practical use, which may also affect other properties of the heat-transfer fluid in an undesirable way.

Alcohol-based, such as glycol-based, heat transfer fluids have several advantages. For example, they possess a low freezing point combined with a low viscosity and high flash point, and the safety profile of different glycols has been extensively studied.

Although many metals are suitable for use in heat exchange systems in parts such as cooling plates and heat exchangers, aluminium based materials are often preferred due to their light weight.

Controlled Atmosphere Brazing (CAB) is a preferred technique for producing such aluminium parts due to the advantageous properties of the end product and the comparatively less complex production method. However, the disadvantage of this technique is that the flux remnants left by the CAB-process are liable to hydrolyse and dissolve during contact with a heat transfer fluid. Eliminating this problem is not straightforward as it either requires performing additional cleaning steps to remove the flux remnants or the use of a less optimal production technique. Consequently, this means that the compatibility of many heat transfer fluids with CAB materials is less than ideal, especially when the maintenance of a low electrical conductivity in the heat transfer fluid is essential.

The present inventors have found that it would be particularly desirable to provide an alcohol-based, particularly a glycol-based, heat transfer fluid capable of maintaining low electrical conductivity upon ageing in the presence of aluminium. It is a particular object of the present invention to provide heat transfer fluids with an improved compatibility with heat exchanger elements produced by Controlled Atmosphere Brazing (CAB).

It is a further object of the present invention to provide improved heat-transfer fluids, preferably alcohol based, which are suitable for use in electrical systems, such as fuel cells, batteries, electrical machines or power electronics.

It is a still further object of the present invention to provide heat-transfer fluids, preferably alcohol based, which have low electrical conductivity and which are capable of maintaining low electrical conductivity upon aging, such as upon ageing at increased temperatures.

It is yet another object of the present invention to provide heat-transfer fluids, preferably alcohol based, which are capable of maintaining comparable low electrical conductivity upon aging, such as upon aging at increased temperatures while requiring less additives than known heat-transfer fluids.

It is a further object of the present invention to provide heat-transfer fluids, preferably glycol based, possessing extended service life compared to known heat-transfer fluids.

It is a further object of the present invention to provide heat-transfer fluids that are less toxic or have other improved properties compared to the known heat-transfer fluids that are capable of maintaining low electrical conductivity.

### SUMMARY OF THE INVENTION

The present inventors have found that one or more of these objectives can be met by employing a heat-transfer fluid composition comprising a base fluid, a divalent metal cation and an organophosphorus acid or a salt thereof, and wherein the composition has an electrical conductivity at 25 °C of less than 500 µS/cm.

As will be shown in the appended examples, it was surprisingly found that the combination of a divalent metal cation with an organophosphorus acid or a salt thereof maintains low electrical conductivity upon aging at increased temperatures. Furthermore, it was surprisingly found that the heat-transfer fluid compositions in accordance with the invention are capable of maintaining this low electrical conductivity upon aging at increased temperatures in the presence of aluminium substrates. Additionally, it was surprisingly found that the heat-transfer fluid compositions in accordance with the invention are capable of maintaining this low electrical conductivity upon aging at increased temperatures in the presence of aluminium structures produced using Controlled Atmosphere Brazing (CAB).

It will be understood by the skilled person based on the present disclosure that the heat-transfer fluid compositions in accordance with the present invention are suitable for use in electrical applications which require less additives (especially antioxidants) and/or which are capable of maintaining low electrical conductivity upon aging for longer periods of time than comparable heat-transfer fluid compositions known in the art.

Hence, in a first aspect the invention provides a heat-transfer fluid composition comprising a base fluid, a divalent metal cation and an organophosphorus acid or a salt thereof, wherein the composition has an electrical conductivity at 25 °C of less than 500 µS/cm, wherein the base fluid consists of water and alcohol, wherein the alcohol is present in an amount in the range of 10-99.5 wt.% by weight of the base fluid, and wherein the composition comprises more than 75 wt.% of the base fluid by total weight of the composition. As will be shown herein, these heat-transfer fluid compositions are capable of maintaining low electrical conductivity, such as upon aging at increased temperatures in the presence of CAB aluminium substrates using the test procedure as described in the experimental section.

In preferred embodiments, the heat-transfer fluid compositions of the invention are provided in the form of ready-to-use compositions described herein.

In a second aspect, the invention provides a method for preparing the heat-transfer fluid compositions and ready-to-use compositions as described herein, said method comprising the steps of:
(i) providing the base fluid;
(ii) providing the organophosphorus acid or the salt thereof;
(iii) providing a salt of the divalent metal cation;
(iv) optionally providing one or more further additives; and
(v) combining the base fluid of step (i) with the organophosphorus acid or the salt thereof of step (ii), the salt of the divalent metal cation of step (iii) and the optional one or more further additives of step (iv) to obtain the composition.

In a third aspect, the invention provides the use of a heat-transfer fluid composition or ready-to-use composition as defined herein as a heat transfer fluid with electrical conductivity development inhibiting properties and/or corrosion inhibiting properties.

In a fourth aspect, the invention provides the use of a heat-transfer fluid composition or ready-to-use composition as defined herein, to inhibit the dissolution of fluoride, aluminium and potassium ions from the brazing flux of an aluminium structure produced via Controlled Atmosphere Brazing (CAB) into said composition, and/or to maintain a low electrical conductivity in an electrical system comprising said composition and an aluminium structure produced via Controlled Atmosphere Brazing (CAB).

### DETAILED DESCRIPTION

A first aspect of the invention concerns a heat-transfer fluid composition comprising a base fluid, a divalent metal cation and an organophosphorus acid or a salt thereof, wherein the composition has an electrical conductivity at 25 °C of less than 500 µS/cm, wherein the base fluid consists of water and alcohol, wherein the alcohol is present in an amount in the range of 10-99.5 wt.% by weight of the base fluid, and wherein the composition comprises more than 75 wt.% of the base fluid by total weight of the composition.

The heat-transfer fluid compositions preferably have an electrical conductivity at 25 °C of less than 350 µS/cm, more preferably less than 250 µS/cm, even more preferably less than 225 µS/cm, still more preferably less than 200 µS/cm, yet more preferably less than 175 µS/cm, yet more preferably less than 150 µS/cm, such as less than 100 µS/cm or less than 50 µS/cm.

In a preferred embodiment, the heat-transfer fluid compositions have an electrical conductivity at 25 °C of between 5 µS/cm and 500 µS/cm, such as between 15 µS/cm and 400 µS/cm, between 30 µS/cm and 300 µS/cm, between 40 µS/cm and 250 µS/cm, between 45 µS/cm and 225 µS/cm, between 50 µS/cm and 225 µS/cm, between 55 µS/cm and 200 µS/cm, between 60 µS/cm and 175 µS/cm or between 65 µS/cm and 150 µS/cm.

As will be appreciated by those skilled in the art, the fact that the heat-transfer fluid compositions have an electrical conductivity at 25 °C of less than 500 µS/cm, or lower in preferred embodiments, does no only concern *'fresh'* heat-transfer fluid compositions but preferably also heat-transfer fluid compositions that have been subjected to aging at increased temperatures using the test procedure as described in the experimental section.

### Base fluid

In accordance with the invention, the base fluid consists of water and alcohol. In preferred embodiments the alcohol is selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, more preferably selected from the group consisting of monoethylene glycol, monopropylene glycol, 1,3-propanediol, glycerol and mixtures thereof.

As used herein, *'monoethylene glycol'* should be interpreted to mean *'ethane-1,2-diol',* and is interchangeably referred to as *'MEG'.*

As used herein, *"monopropylene glycol"* should be interpreted to mean *'propane-1,2-diol',* and is interchangeably referred to as *'MPG'.*

As used herein, the term *'glycerol'* means *'propane-1,2,3-triol'* and is synonymous with glycerin. In preferred embodiments of the invention, the base fluid consists of water, monoethylene glycol, monopropylene glycol, 1,3-propanediol, glycerol or mixtures thereof.

The base fluid consists of water and alcohol, wherein the alcohol is present in an amount of 10-99.5 wt.%, by weight of the base fluid, preferably 10-80 wt.%, more preferably 30-70 wt.%. In particular embodiments, the alcohol is present in an amount in the range of 33-60 wt.%, by weight of the base fluid.

In embodiments, the base fluid comprises more than 50 wt.% water, by weight of the base fluid, preferably more than 70 wt.%, more preferably more than 85 wt.%.

In embodiments, the base fluid comprises more than 50 wt.% monoethylene glycol, by weight of the base fluid, preferably more than 70 wt.%, more preferably more than 85 wt.%, most preferably more than 95 wt.% monoethylene glycol.

In embodiments, the base fluid comprises more than 50 wt.% monopropylene glycol, by weight of the base fluid, preferably more than 70 wt.%, more preferably more than 85 wt.%, most preferably more than 95 wt.% monopropylene glycol.

In embodiments, the base fluid comprises more than 50 wt.% 1,3-propane diol, by weight of the base fluid, preferably more than 70 wt.%, more preferably more than 85 wt.%, most preferably more than 95 wt.% 1,3-propane diol.

In embodiments, the base fluid comprises more than 50 wt.% glycerol, by weight of the base fluid, preferably more than 70 wt.%, more preferably more than 85 wt.%, most preferably more than 95 wt.% glycerol.

In preferred embodiments, the heat-transfer fluid composition comprises more than 78 wt.%, by total weight of the heat-transfer fluid composition, of base fluid, more preferably more than 85 wt.%, even more preferably more than 90 wt.%, still more preferably more than 95 wt.% or more than 96 wt.% of base fluid.

As will be understood by the person skilled in the art, the base fluid is normally added to the heat-transfer fluid composition *'quantum satis'.* In embodiments, the heat-transfer fluid composition comprises less than 99.9 wt.% base fluid, by total weight of the heat-transfer fluid composition, such as less than 99.8 wt.%, less than 99.5 wt.% or less than 99 wt.%, less than 98 wt.%, less than 97 wt.%, less than 96 wt.%, less than 95 wt.%, less than 94 wt.%, less than 93 wt.%, less than 92 wt.%, less than 91 wt.%, less than 90 wt.%, less than 89 wt.%, less than 88 wt.%, less than 87 wt.%, less than 86 wt.%, less than 85 wt.%, less than 84 wt.%, less than 83 wt.%, less than 82 wt.%, or less than 81 wt.% of base fluid.

In preferred embodiments, the heat-transfer fluid composition comprises less than 99.9 wt.% base fluid, by total weight of the heat-transfer fluid composition, less than 99.5 wt.%, less than 99 wt.%, less than 98 wt.% or less than 97 wt.%.

### Organophosphorus acid

In accordance with the invention, the compositions as described herein comprise an organophosphorus acid or a salt thereof. The compositions can also comprise mixtures of different organophosphorus acids or salts thereof. Wherever the terms *'organophosphorus acid', 'organophosphonic acid'* or *'organophosphinic acid'* are used, the wording *'and salts thereof* should be read along, unless explicitly mentioned otherwise.

Suitable cations in salts of organophosphorus acid, salts of organophosphonic acid and salts of organophosphinic acid are chosen from the group consisting of alkali metals, earth alkali metals, ammonium and protonated amines, preferably chosen from the group consisting of lithium, potassium, sodium, magnesium, calcium, strontium, ammonium and protonated amines. The term *'protonated amines'* as used herein encompasses quaternary ammonium cations (NR₄⁺, R being an alkyl group or an aryl group) and primary, secondary and tertiary ammonium cations. Nonlimiting examples of protonated amines are protonated ethoxylated fatty amines and amine ethoxylates, such as Genamin CH020, Genamin C200, Genamin 3910, Genamin Gluco 50, Jeffamine range and Noramox range.

As used herein, the term *'organophosphorus acid'* should be interpreted to mean a compound comprising at least one organic moiety in which at least one phosphorus atom is double bonded to an oxygen atom (P=O) and contains at least one hydroxyl group as functional group.

As used herein, the term *'alkyl chain'* should be interpreted to comprise both linear and branched chains, wherein the chains are preferably substituted with one or more of hydroxyl group, amine group, phosphonic acid group or a salt thereof and carboxylic acid group or a salt thereof, and wherein the chains may comprise one or more of nitrogen, oxygen and sulphur atoms in their backbone, with the exclusion of the position of the backbone that is bonded to the phosphorus atom. The alkyl chains preferably comprise between 2 and 25 carbon atoms, more preferably between 2 and 8 carbon atoms.

As used herein, the term *'alkoxy chain'* should be interpreted to comprise both linear and branched alkyl chains that are bonded to the phosphorus atom via an oxygen atom, wherein the chains are preferably substituted with one or more of hydroxyl group, amine group, phosphonic acid group or a salt thereof and carboxylic acid group or a salt thereof, and wherein the chains may comprise one or more of nitrogen, oxygen and sulphur atoms in their backbone. The alkoxy chains preferably comprise between 2 and 25 carbon atoms, more preferably between 2 and 8 carbon atoms.

As used herein, the term *'aryl group'* should be interpreted to comprise aryl groups, such as phenyl or naphthyl groups, that are preferably substituted with one or more of hydroxyl group, amine group, phosphonic acid group or a salt thereof and carboxylic acid group or a salt thereof. The aryl groups preferably comprise between 6 and 10 carbon atoms.

As used herein, the term *'aryloxy group'* should be interpreted to comprise aryl groups, such as phenyl or naphthyl groups, that are bonded to the phosphorus atom via an oxygen atom and that are preferably substituted with one or more of hydroxyl group, amine group, phosphonic acid group or a salt thereof and carboxylic acid group or a salt thereof. The aryloxy groups preferably comprise between 6 and 10 carbon atoms.

In an embodiment, the organophosphorus acid or the salt thereof has a molecular weight below 10000 g/mol, preferably below 5000 g/mol, more preferably below 2500 g/mol, even more preferably below 1000 g/mol, such as between 90 and 750 g/mol or between 250 and 450 g/mol.

In an embodiment, the organophosphorus acid is an organophosphorus acid according to formula (I): 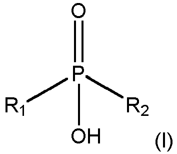 wherein R₁ is either an alkoxy chain, a hydroxyl group, an alkyl chain, an aryloxy group or an aryl group, wherein R₂ is an alkyl chain or an aryl group. In a preferred embodiment, the alkoxy chain, the alkyl chain, the aryloxy group and/or the aryl group in the organophosphorus acid according to formula (I) are independently substituted with one or more of hydroxyl group, amine group, phosphonic acid group or a salt thereof and carboxylic acid group or a salt thereof.

In a preferred embodiment, the organophosphorus acid according to formula (I) is either an organophosphonic acid or an organophosphinic acid, wherein in the case of organophosphonic acid, R₁ is either an alkoxy chain, an aryloxy group or a hydroxyl group and R₂ is an alkyl chain or an aryl group, and wherein in the case of organophosphinic acid both R₁ and R₂ are independently chosen from alkyl chains and aryl groups.

As used herein, the term *'organophosphonic acid'* should be interpreted to mean a compound according to the general structure (A) below comprising an organic moiety R₂ and a group R₁ that can be either an organic moiety or hydrogen, wherein the phosphorus atom:
- is double bonded to an oxygen atom (P=O);
- contains a hydroxyl group as functional group; and
- is bonded once to a carbon atom (P-C).

As used herein, the term *'organophosphinic acid'* should be interpreted to mean a compound according to the general structure (B) below comprising at least two organic moieties R₁ and R₂, wherein the phosphorus atom,
- is double bonded to an oxygen atom (P=O)
- contains a hydroxyl group as functional group; and
- is bonded twice to a carbon atom (P-C):

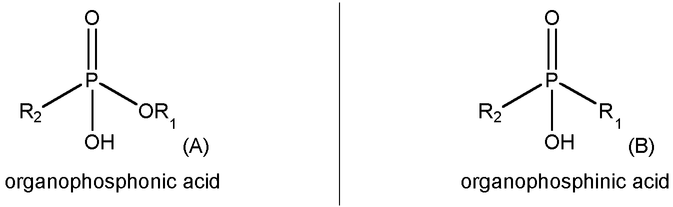

In an embodiment, the organophosphorus acid or the salt thereof is an organophosphonic acid according to general structure (A) wherein R₁ is either a hydrogen or an alkyl chain and R₂ is an alkyl chain and wherein the one or more alkyl chains independently comprise between a 2 and 8 carbon atoms and are optionally independently substituted with one or more of hydroxyl group, amine group, phosphonic acid group or a salt thereof and carboxylic acid group or a salt thereof, preferably substituted with one or more carboxylic acid groups or a salt thereof.

In an embodiment, the organophosphorus acid is an organophosphonic acid according to general structure (A) having a molecular weight below 10000 g/mol, preferably below 5000 g/mol, more preferably below 2500 g/mol, even more preferably below 1000 g/mol, such as between 90 and 750 g/mol or between 250 and 450 g/mol.

In an embodiment, the organophosphorus acid is an organophosphinic acid according to general structure (B), wherein both R₁ and R₂ are alkyl chains and wherein these alkyl chains independently comprise between 2 and 8 carbon atoms and are optionally independently substituted with one or more of hydroxyl group, amine group, phosphonic acid group or a salt thereof and carboxylic acid group or a salt thereof, preferably substituted with one or more carboxylic acid groups or a salt thereof.

In an embodiment, the organophosphorus acid or the salt thereof is an organophosphinic acid according to general structure (B) or a salt thereof with a molecular weight below 10000 g/mol, preferably below 5000 g/mol, more preferably below 2500 g/mol, even more preferably below 1000 g/mol, such as between 90 and 750 g/mol or between 250 and 450 g/mol.

In an embodiment, the organophosphorus acid is either an organophosphonic acid or an organophosphinic acid according to structure formula (C) below, wherein n = 1 - 10, preferably n = 1 - 5, and wherein alkyl C1-C10 is straight or branched alkyl:

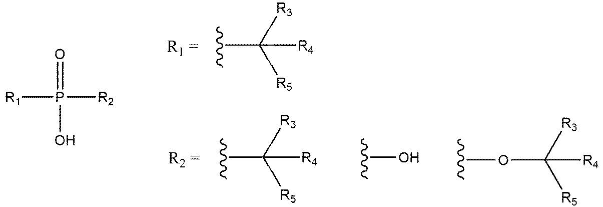

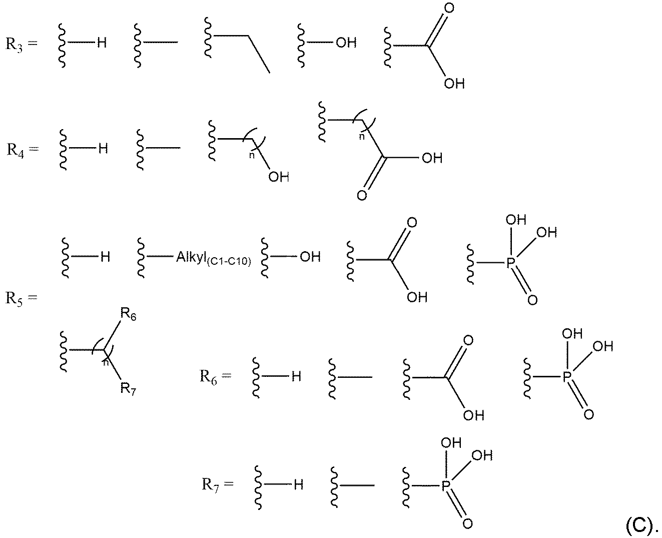

In an embodiment, the organophosphorus acid is an organophosphonic acid according to formula (D) below, wherein n = 1 - 10, wherein m = 1 - 5 and wherein alkyl C1-C10 is straight or branched alkyl:

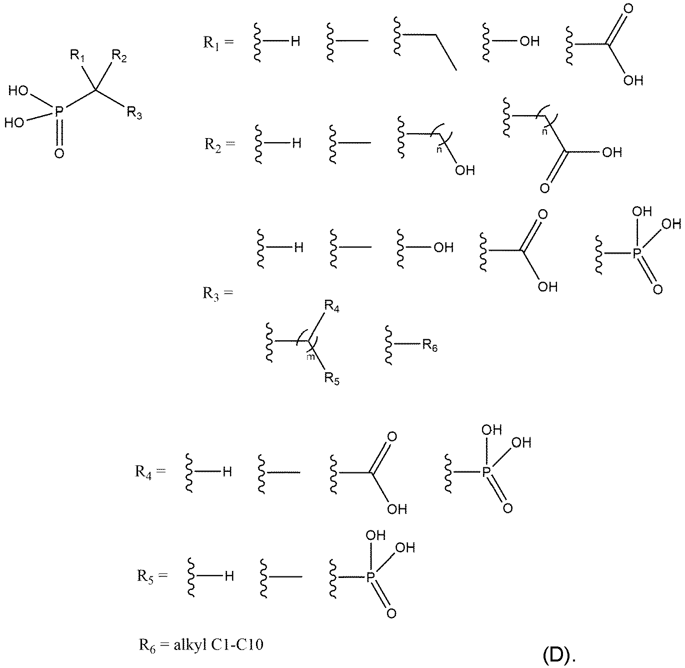

In a preferred embodiment, the organophosphorus acid is an organophosphonic acid selected from the group consisting of 2-phosphonobutane-1,2,4-tricarboxylic acid (2-PBTC), 2-hydroxyphosphonocarboxylic acid (HPAA), 1-hydroxyethylidene-1,1-diphosphonic acid (HEDP), 2-phosphonobutane-1,2,4-tricarboxylic acid, 2-phosphonobutane-1,2,3,4-tetracarboxylic acid, 2-phosphono ethane-1,2-dicarboxylic acid, 2-carboxyethyl phosphonic acid (CEPA) and combinations thereof.

In a preferred embodiment, the organophosphorus acid is a combination of two or more organophosphonic acids according to formula (II) below wherein n = 1 - 20, preferably the sodium salt of a combination of two or more organophosphonic acids according to formula (II) wherein n = 1 - 20, more preferably a combination of the sodium salt of a combination of two or more organophosphonic acids according to formula (II) wherein n = 1 - 6:

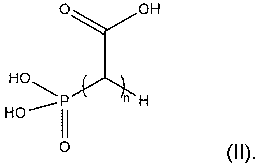

In a very preferred embodiment, the organophosphorus acid is 2-phosphonobutane-1,2,4-tricarboxylic acid (2-PBTC).

In an embodiment, the organophosphorus acid is an organophosphinic acid according to formula (E) below, wherein n = 1 - 10, wherein m = 1 - 5 and wherein alkyl C1-C10 is straight or branched alkyl:

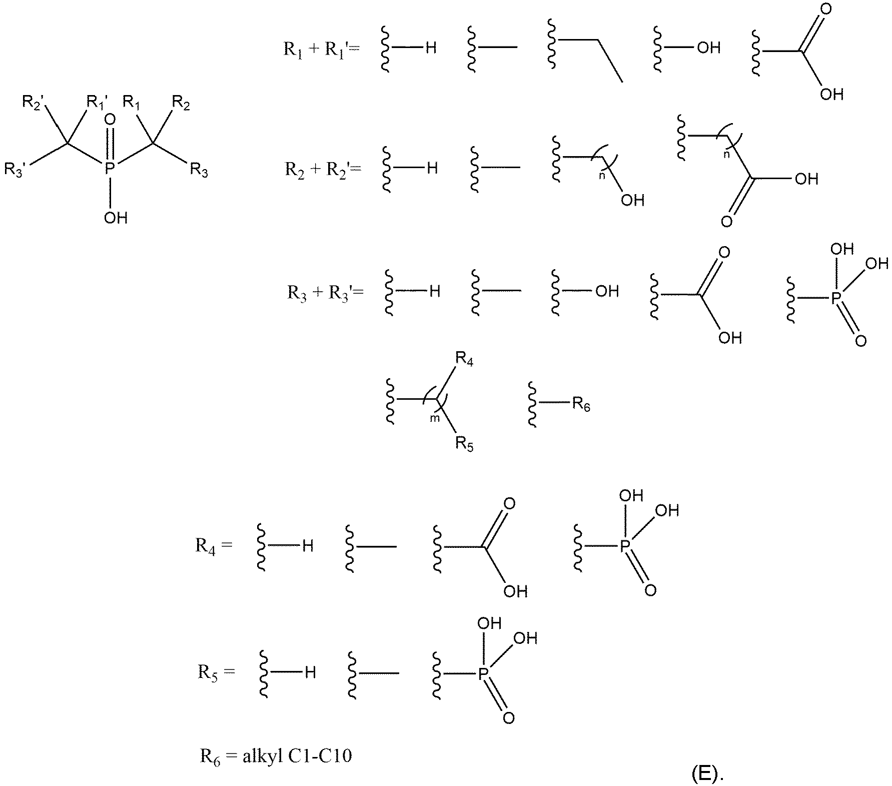

In a very preferred embodiment, the organophosphorus acid is the organophosphinic acid 2,2'-(hydroxyphosphoryl)disuccinic acid.

In an embodiment, the organophosphorus acid is an organophosphonic acid according to formula (F):

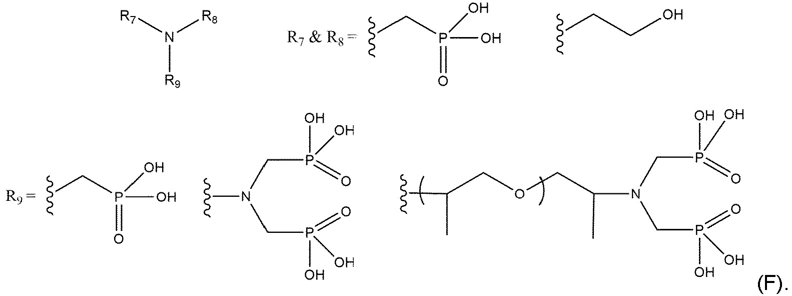

In a preferred embodiment, the organophosphorus acid is an organophosphonic acid selected from the group consisting of diethylenetriaminepenta(methylenephosphonic acid) (DTPMP), aminotris(methylenephosphonic acid) (ATMP), hydroxyethylamino-di(Methylene phosphonic Acid) (HEMPA), ethylenediaminetetra(methylenephosphonic acid) (EDTMP), tetramethylenediaminetetra(methylenephosphonic acid) (TDTMP), hexamethylenediaminetetra(methylenephosphonic acid) (HDTMP), diethylenetriaminepenta(methylenephosphonic acid) (DTPMP) and combinations thereof.

In an embodiment, the organophosphorus acid or the salt thereof is present in the heat-transfer fluid composition in an amount within the range of 0.0001 - 0.1 wt.%, by total weight of the heat-transfer fluid composition, preferably within the range of 0.0005 - 0.05 wt.%, more preferably within the range of 0.001 - 0.01 wt.%.

### Divalent metal cation

In accordance with the invention, the heat-transfer fluid compositions as described herein comprise a divalent metal cation, such as a divalent calcium, magnesium, strontium, manganese, zinc or copper cation.

In a preferred embodiment, the divalent metal cation is selected from the group of earth alkali metals and combinations thereof, more preferably a divalent metal cation selected from the group consisting of divalent calcium, magnesium and strontium cations and combinations thereof. Most preferably the divalent metal cation is a divalent strontium cation.

In an embodiment, the divalent metal cation is generated through the dissolution of a corresponding metal salt. In a preferred embodiment, this is the chloride, bromate, fluoride, iodide, chlorate, borate, nitrate, nitrite, sulphate, sulphite, phosphate, phosphite, hypophosphite, molybdate, selenate, tungstate, silicate, carbonate, acetate, citrate or lactate salt of the divalent metal cation. In a more preferred embodiment, this is the nitrate, sulphate or acetate salt of the divalent metal cation. Accordingly, in an embodiment the heat-transfer fluid composition as described herein further comprises an anion chosen from the group consisting of chloride, bromate, fluoride, iodide, chlorate, borate, nitrate, nitrite, sulphate, sulphite, phosphate, phosphite, hypophosphite, molybdate, selenate, tungstate, silicate, carbonate, acetate, citrate, lactate and a combination thereof, more preferably an anion chosen from the group consisting of nitrate, sulphate, acetate and a combination thereof.

In an embodiment, the divalent metal cation is present in the heat-transfer fluid composition in an amount within the range of 0.0001 - 0.1 wt.% by total weight of the heat-transfer fluid composition, preferably within the range of 0.0005 - 0.05 wt.%, more preferably within the range of 0.001 - 0.01 wt.%.

In a particular embodiment, the amount of divalent metal cation in the heat-transfer fluid composition is controlled such that the molar ratio of divalent metal cation to organophosphorus acid is within the range of 0.01 - 100, preferably within the range 0.05 - 50, more preferably within the range of 0.1 - 10.

### Electrical conductivity

In embodiments, the heat-transfer fluid composition as described herein is provided which has the electrical conductivity described herein elsewhere, as measured in accordance with ASTM D1125 with a Mettler-Toledo SevenExcellence Cond meter S700 equipped with an InLab 741-ISM electrical conductivity probe.

In embodiments, the heat-transfer fluid composition has an electrical conductivity at 25°C of less than 350 µS/cm, preferably less than 250 µS/cm, more preferably less than 200 µS/cm, even more preferably less than 175 µS/cm, still more preferably less than 150 µS/cm, such as less than 100 µS/cm or less than 50 µS/cm.

In embodiments, the heat-transfer fluid composition has an electrical conductivity at 25°C between 5 and 500 µS/cm, between 5 and 250 µS/cm, between 5 and 200 µS/cm, between 5 and 150 µS/cm, between 5 and 100 µS/cm, between 10 and 100 µS/cm, between 15 and 100 µS/cm, between 20 and 100 µS/cm, between 25 and 100 µS/cm, between 30 and 100 µS/cm, between 35 and 100 µS/cm, between 40 and 100 µS/cm, between 45 and 100 µS/cm or between 50 and 100 µS/cm.

In embodiments, the heat-transfer fluid composition has an electrical conductivity at 25°C between 10 and 500 µS/cm, between 10 and 250 µS/cm, between 10 and 200 µS/cm, between 25 and 200 µS/cm or between 25 and 150 µS/cm.

In embodiments, the heat-transfer fluid composition has an electrical conductivity at 25°C after aging for 7 days at 90 °C, preferably in the presence of aluminium, more preferably in the presence of an aluminium structure produced via Controlled Atmosphere Brazing (CAB), using the test procedure as described in the experimental section, of less than 500 µS/cm, preferably less than 350 µS/cm, more preferably less than 250 µS/cm, even more preferably less than 225 µS/cm, still more preferably less than 175 µS/cm, yet more preferably less than150 µS/cm, such as less than 100 µS/cm or less than 50 µS/cm.

In embodiments, the heat-transfer fluid composition as described herein is provided wherein, after aging for 7 days at 90 °C in the presence of an aluminium structure produced via Controlled Atmosphere Brazing (CAB) using the test procedure as described in the experimental section, the concentration of fluoride dissolved from the CAB flux is less than 200 ppm, based on the total weight of the heat-transfer fluid composition, preferably less than 100 ppm, more preferably less than 50 ppm, even more preferably less than 25 ppm, and/or the concentration of aluminium dissolved from the CAB flux is less than 100 ppm, more preferably less than 50 ppm, even more preferably less than 25 ppm, yet more preferably less than 10 ppm and/or the concentration of potassium dissolved from the CAB flux is less than 150 ppm, more preferably less than 100 ppm, even more preferably less than 75 ppm, yet more preferably less than 50 ppm, wherein the concentration of dissolved aluminium and dissolved potassium is determined by inductive coupled plasma - optical emission spectroscopy (ICP-OES) and wherein the concentration of fluoride is determined by ion-chromatography (IC).

In preferred embodiments, the heat-transfer fluid composition as described herein is provided wherein, after aging for 7 days at 90 °C in the presence of an aluminium structure produced via Controlled Atmosphere Brazing (CAB) using the test procedure as described in the experimental section, the concentration of fluoride dissolved from the CAB flux is less than 200 ppm, based on the total weight of the heat-transfer fluid composition, preferably less than 100 ppm, more preferably less than 50 ppm, even more preferably less than 25 ppm, the concentration of aluminium dissolved from the CAB flux is less than 100 ppm, more preferably less than 50 ppm, even more preferably less than 25 ppm, yet more preferably less than 10 ppm and the concentration of potassium dissolved from the CAB flux is less than 150 ppm, more preferably less than 100 ppm, even more preferably less than 75 ppm, yet more preferably less than 50 ppm, wherein the concentration of dissolved aluminium and dissolved potassium is determined by inductive coupled plasma - optical emission spectroscopy (ICP-OES) and wherein the concentration of fluoride is determined by ion-chromatography (IC).

### Corrosion inhibition

As explained throughout this document, the heat-transfer fluid compositions in accordance with the invention exhibit the electrical conductivity characteristics described herein while not significantly corroding metals, preferably copper, brass, solder coated brass, steel, cast iron and aluminium, more preferably aluminium.

The corrosion inhibiting properties of the heat-transfer fluid compositions as described herein are tested via a glassware corrosion test (according to ASTM D1384) and a hot surface corrosion test (according to ASTM D4340), the results of which are included in the experimental section.

### Further additives

As will be understood by the skilled person, based on the teachings presented herein, the heat-transfer fluid compositions in accordance with the invention may comprise one or more further additives, as is conventional in the art. It is within the routine capabilities of one of ordinary skill in the art to determine how much of a certain additive can be added such that the electrical conductivity of the resulting composition is in accordance with the invention. As will be appreciated by those skilled in the art, non-ionic further additives are preferred. The heat-transfer fluid composition comprises well-defined amounts of water, alcohol, divalent metal cation and organophosphorus acid or a salt thereof. Accordingly, the one or more further additives are different from water, alcohol, divalent metal cation and organophosphorus acid or the salt thereof.

In certain embodiments, the heat-transfer fluid composition comprises one or more further additives, preferably one or more further additives selected from the group consisting of corrosion inhibitors, liquid dielectrics, antioxidants, anti-wear agents, buffering agents, detergents, antifoam agents, bittering agents and dyes. These can be either inorganic compounds, which do not comprise carbon-hydrogen bonds, or organic compounds, which do comprise carbon-hydrogen bonds. In preferred embodiments, the heat-transfer fluid composition further comprises one or more of said further additives in an amount within the range of 0.0001 - 20 wt.%, by total weight of the heat-transfer fluid composition, preferably 0.005 - 15 wt.%, more preferably 0.025 - 10 wt.%.

In preferred embodiments, the heat-transfer fluid composition comprises one or more corrosion inhibitors as further ingredients, preferably selected from the group consisting of silicates, phosphates, organic acids, thiazoles, triazoles, molybdates, nitrates and amines, more preferably selected from the group consisting of organic acids, triazoles and amines.

In embodiments, the heat-transfer fluid composition further comprises one or more inorganic anticorrosive agents. As will be understood by the skilled person, high concentrations of inorganic compounds, particularly inorganic compounds in salt form, may increase the electrical conductivity of the heat-transfer fluid compositions, which would render them unsuitable for use in a fuel cell as this leads to a reduced voltage of the fuel cell and corrosion of separator plates.

In embodiments, the one or more inorganic anticorrosive agent are present in the heat-transfer fluid composition in an amount less than 100 ppm, by total weight of the heat-transfer fluid composition, preferably less than 75 ppm, more preferably less than 50 ppm, even more preferably less than 25 ppm, most preferably less than 10 ppm, provided that the electrical conductivity of the composition at 25 °C is less than 500 µS/cm.

In embodiments, the one or more inorganic anticorrosive agent are present in the heat-transfer fluid composition in an amount of more than 1 ppm, by total weight of the heat-transfer fluid composition, more than 3 ppm, or more than 5 ppm, provided that the electrical conductivity of the composition at 25 °C is less than 500 µS/cm.

**In** embodiments, the heat-transfer fluid composition further comprises one or more inorganic anticorrosive agents in an amount within the range of 0.0001 - 10 wt.%, by total weight of the heat-transfer fluid composition, preferably 0.005 - 5 wt.%, more preferably 0.025 - 3 wt.%, provided that the electrical conductivity of the composition at 25 °C is less than 500 µS/cm.

In embodiments, the heat-transfer fluid composition comprises one or more inorganic anticorrosive agents selected from the group consisting of silicates, molybdates, nitrates, nitrites, borates, tungstates, sulphates, sulphites, carbonates, phosphonates, selenates and phosphates.

In preferred embodiments, the heat-transfer fluid composition further comprises one or more further organic additives selected from the group consisting of thiazoles, triazoles, polyolefins, polyalkylene oxides, silicon oils, silicate esters (such as Si(OR)₄, wherein R is a C₁ to C₄ alkyl group), mineral oils, monocarboxylic acids, dicarboxylic acids, tricarboxylic acids and amines. In preferred embodiments, the heat-transfer fluid composition further comprises one or more of said additives in an amount within the range 0.0001 - 20 wt.%, by total weight of the heat-transfer fluid composition, preferably 0.005 - 15 wt.%, more preferably 0.025 - 10 wt.%.

In preferred embodiments, the heat-transfer fluid composition comprises as a further additive a corrosion inhibitor which is a thiazole or a triazole, preferably an aromatic triazole or thiazole. In preferred embodiments, the heat-transfer fluid composition comprises as further additive(s) one or more triazoles selected from the group consisting of tolyltriazole and benzotriazole.

In embodiments, the heat-transfer fluid composition comprises as a further additive a triazole or a thiazole, preferably tolyltriazole or benzotriazole, in an amount of more than 0.001 wt.%, by total weight of the heat-transfer fluid composition, preferably more than 0.005 wt.%, preferably more than 0.01 wt.% and/or less than 5 wt.%, preferably less than 1 wt.%, preferably less than 0.1 wt.%.

In embodiments, the heat-transfer fluid composition comprises as a further additive a defoaming agent. Preferably, the defoaming agent is selected from the group consisting of polyalkylene oxides, silicon polymers (such as a 3D silicon polymer), silicon oils and combinations thereof.

In embodiments, the heat-transfer fluid composition comprises as a further additive the defoaming agent in an amount of more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In embodiments, the heat-transfer fluid composition comprises as a further additive a corrosion inhibitor selected from the group consisting of aromatic carboxylates, aliphatic monocarboxylates, aliphatic dicarboxylates, aliphatic tricarboxylates, polymeric corrosion inhibitors and combinations thereof.

In embodiments, the heat-transfer fluid composition comprises as a further additive an aliphatic monocarboxylate, preferably an aliphatic monocarboxylate selected from the group consisting of C₄-C₁₂ aliphatic monocarboxylates, in an amount of more than 50 ppm, by total weight of the heat-transfer fluid composition, preferably more than 100 ppm, preferably more than 500 ppm and/or less than 5000 ppm, preferably less than 2500 ppm, preferably less than 1000 ppm.

In embodiments, the heat-transfer fluid composition comprises as a further additive an aliphatic dicarboxylate, preferably an aliphatic dicarboxylate selected from the group consisting of C₆-C₁₆ aliphatic dicarboxylates, in an amount of more than 50 ppm, by total weight of the heat-transfer fluid composition, preferably more than 100 ppm, preferably more than 500 ppm and/or less than 5000 ppm, preferably less than 2500 ppm, preferably less than 1000 ppm.

In embodiments, the heat-transfer fluid composition comprises as a further additive an aliphatic tricarboxylate, preferably an aliphatic tricarboxylate selected from the group consisting of C₇-C₁₈ aliphatic tricarboxylates, in an amount of more than 50 ppm, by total weight of the heat-transfer fluid composition, preferably more than 100 ppm, preferably more than 500 ppm and/or less than 5000 ppm, preferably less than 2500 ppm, preferably less than 1000 ppm.

In embodiments, the heat-transfer fluid composition comprises as a further additive an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4-dicarboxylate and combinations thereof, in an amount of more than 50 ppm, by total weight of the heat-transfer fluid composition, preferably more than 100 ppm, preferably more than 500 ppm and/or less than 5000 ppm, preferably less than 2500 ppm, preferably less than 1000 ppm.

In embodiments, the heat-transfer fluid composition comprises as a further additive an amine as a corrosion inhibitor or neutralizing base. Preferably, the amine is selected from the group consisting of exthoxylated fatty amines, amine ethoxylates, ethanolamine, diethanolamine, triethanolamine, morpholine, benzylamine, cyclohexylamine, dicyclohexylamine, hexylamine, AMP (2-amino-2-methyl-l-propanol or isobutanolamine), DEAE (diethylethanolamine), DEHA (diethylhydroxylamine), DMAE (2-dimethylaminoethanol), DMAP (dimethylamino-2-propanol), MOPA (3-methoxypropylamine) and combinations thereof.

In embodiments, the heat-transfer fluid composition comprises as a further additive an amine in an amount more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In embodiments, the heat-transfer fluid composition comprises as a further additive an antioxidant. Preferably, the antioxidant is selected from the group consisting of phenols, such as 2,6 di-t-butyl methylphenol and 4,4'-methylene-bis(2,6-di-*t*-butylphenol); aromatic amines, such as *p,p*-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkylphenyl-2-naphthal-amines, as well as sulphur containing compounds and combinations thereof.

In embodiments, the heat-transfer fluid composition comprises as a further additive an antioxidant in an amount more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In embodiments, the heat-transfer fluid composition comprises as a further additive an antiwear agent.

In embodiments, the heat-transfer fluid composition comprises as a further additive the antiwear agent in an amount of more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In embodiments, the heat-transfer fluid composition comprises as further additive(s) one or more surfactants. In a preferred embodiment, the one or more surfactants are selected from the group consisting of non-ionic surfactants, such as one or more non-ionic surfactants selected from the group consisting of:
- fatty acid esters, such as sorbitan fatty acid esters;
- polyalkylene glycols;
- polyalkylene glycol esters;
- copolymers and block copolymers of ethylene oxide and propylene oxide;
- polyoxyalkylene derivatives of sorbitan fatty acid esters; and
- alkoxylated alcohol ethers.

In embodiments, the heat-transfer fluid composition comprises said one or more surfactants in an amount of more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In certain embodiments of the invention, the heat-transfer fluid composition comprises as a further additive a dielectric liquid. Preferred dielectric liquids are minerals oils, silicon oils and mixtures thereof.

In certain embodiments, the heat-transfer fluid composition comprises more than 0.0001 wt.%, by total weight of the heat-transfer fluid composition, of the dielectric liquid preferably more than 0.001 wt.%, preferably more than 0.01 wt.% and/or less than 10 wt.%, preferably less than 5 wt.%, preferably less than 3 wt.%.

In certain embodiments, the heat-transfer fluid composition comprises 0.0001-10 wt.%, by total weight of the heat-transfer fluid composition, of the dielectric liquid, preferably 0.001-5 wt.%, preferably 0.01-1 wt.%.

In certain embodiments, the heat-transfer fluid composition comprises as a further additive one or more dyes, preferably non-ionic dyes as disclosed in EP1809718B1 and in KR102108349B1.

In embodiments, the heat-transfer fluid composition comprises said one or more dyes in an amount of more than 0.001 wt.%, by total weight of the heat-transfer fluid composition, preferably more than 0.005 wt.%, preferably more than 0.01 wt.% and/or less than 1 wt.%, preferably less than 0.5 wt.%, preferably less than 0.1 wt.%.

In certain embodiments, the heat-transfer fluid composition comprises, for safety reasons, as a further additive one or more bittering agents, preferably in an amount of less than 100 ppm, by total weight of the heat-transfer fluid composition, preferably less than 80 ppm, less than 60 ppm, less than 40 ppm, or less than 20 ppm.

In certain embodiments, the heat-transfer fluid composition comprises as a further additive one or more polymeric viscosity modifiers, such as homopolymers of ethylene oxide, random copolymers of ethylene oxide and propylene oxide, 80% hydrolysed polyvinylalcohol, polyalkoxy grafted polyvinylalcohol and poly(vinylalcohol-co-ethylene), preferably in an amount of more than 0.001 wt.%, by total weight of the heat-transfer fluid composition, preferably more than 0.005 wt.%, preferably more than 0.01 wt.% and/or less than 10 wt.%, preferably less than 5 wt.%, preferably less than 3 wt.%.

In a preferred embodiment, the heat-transfer fluid composition as defined herein does not comprise phosphate.

### Composition as a heat-transfer fluid

In highly preferred embodiments, the heat-transfer fluid composition, preferably the ready-to-use heat-transfer fluid composition, as described hereinbelow is a heat-transfer fluid, preferably a heat-transfer fluid suitable for use in a solar system, a fuel cell, an electrical motor, a generator, a battery, power electronics or electronic equipment, most preferably a heat-transfer fluid suitable for use in a fuel cell or power electronics.

**As** will be understood by the skilled person, depending on (for example) the intended application, the compositions in accordance with the invention may be formulated and used at various concentrations. Hence, the heat-transfer fluid composition is not particularly limited by the concentration of the divalent metal cation, the organophosphorus acid or the salt thereof or other additives described herein, provided that the electrical conductivity at 25 °C is less than 500 µS/cm. Thus, depending on the envisaged application, the compositions described herein may be suitable for use as is, or may require dilution by base fluid before use. However, the present inventors have found that it is particularly advantageous to provide the compositions of the invention in the form of a ready-to-use composition which may be suitable for use as a fuel cell heat-transfer fluid or in the form of a concentrate which is suitable to prepare said ready-to-use composition.

### Ready-to-use composition

In a highly preferred embodiment, the heat-transfer fluid composition as described herein is provided in the form of a ready-to-use composition wherein:
- the concentration of the organophosphorus acid or the salt thereof is within the range of 0.0001 - 0.05 wt.%, by total weight of the ready-to-use composition, preferably within the range of 0.0005 - 0.025 wt.%, more preferably within the range of 0.001 - 0.005 wt.%;
- the concentration of the divalent metal cation is within the range of 0.0001 - 0.05 wt.%, by total weight of the ready-to-use composition, preferably within the range of 0.0005 - 0.025 wt.%, more preferably within the range of 0.001 - 0.005 wt.%; and
- the ready-to-use composition comprises more than 90 wt.%, by total weight of the ready-to-use composition, preferably more than 95 wt.%, preferably more than 98 wt.%, preferably more than 98.5 wt.% of the base fluid.

In embodiments, the ready-to-use composition has an electrical conductivity at 25°C of less than 350 µS/cm, preferably less than 250 µS/cm, more preferably less than 200 µS/cm, even more preferably less than 175 µS/cm, still more preferably less than 150 µS/cm, yet more preferably less than 100 µS/cm, such as less than 50 µS/cm.

In embodiments, the ready-to-use composition has an electrical conductivity at 25°C between 10 and 500 µS/cm, between 10 and 300 µS/cm, between 10 and 250 µS/cm, between 10 and 200 µS/cm, between 10 and 175 µS/cm, between 10 and 150 µS/cm, between 25 and 150 µS/cm, between 40 and 150 µS/cm, between 50 and 150 µS/cm, between 60 and 150 µS/cm, between 75 and 150 µS/cm, between 90 and 150 µS/cm, between 100 and 150 µS/cm or between 110 and 150 µS/cm.

In embodiments, the ready-to-use composition has an electrical conductivity at 25°C between 25 and 500 µS/cm, between 25 and 250 µS/cm, between 25 and 200 µS/cm, between 75 and 200 µS/cm or between 50 and 175 µS/cm

In an embodiment, the amount of divalent metal cation in the ready-to-use composition is controlled such that the molar ratio of the divalent metal cation to the organophosphorus acid is within the range of 0.01 - 100, preferably within the range 0.05 - 50, more preferably within the range of 0.1 - 10.

In preferred embodiments, the base fluid in the ready-to-use composition consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol glycerol and mixtures thereof, preferably selected from the group consisting of monoethylene glycol, monopropylene glycol, 1,3-propanediol, glycerol and mixtures thereof; and wherein the amount of the alcohol is in the range of 10-80 wt.%, by total weight of the ready-to-use composition, preferably 30-70 wt.%. In particular embodiments, the amount of the alcohol is in the range of 10-45 wt.%, by total weight of the ready-to-use composition.

In highly preferred embodiments, the ready-to-use composition has an electrical conductivity at 25 °C of less than 500 µS/cm, preferably less than 350 µS/cm, more preferably less than 250 µS/cm, even more preferably less than 225 µS/cm, still more preferably less than 175 µS/cm, yet more preferably less than150 µS/cm, most preferably less than 100 µS/cm, wherein the electrical conductivity is determined after aging the heat-transfer fluid at 90°C for 7 days, preferably in the presence of aluminium substrates, more preferably in the presence of an aluminium structure produced via Controlled Atmosphere Brazing (CAB), using the test procedure as described in the experimental section.

In preferred embodiments, the ready-to-use composition has a kinematic viscosity, determined according to ASTM standard test method D445-19a, at 20 °C, in the range of 0.1 and 100 mm²/s, preferably in the range of 0.5 and 50 mm²/s, more preferably in the range of 1 and 10 mm²/s.

### Concentrate

In a preferred embodiment, the heat-transfer fluid composition as described herein is provided in the form of a concentrate suitable to prepare the ready-to-use composition as described hereinbefore.

In embodiments, this concentrate has an electrical conductivity at 25°C of less than 200 µS/cm, preferably less than 150 µS/cm, more preferably less than 100 µS/cm, even more preferably less than 75 µS/cm, still more preferably less than 50 µS/cm, such as less than 25 µS/cm or less than 10 µS/cm.

In embodiments, the concentrate has an electrical conductivity at 25°C between 5 and 200 µS/cm, between 5 and 150 µS/cm, between 5 and 100 µS/cm, between 5 and 75 µS/cm, between 5 and 50 µS/cm, between 10 and 100 µS/cm, between 15 and 100 µS/cm, between 20 and 100 µS/cm, between 25 and 100 µS/cm, between 30 and 100 µS/cm, between 35 and 100 µS/cm, between 40 and 100 µS/cm, between 45 and 100 µS/cm or between 50 and 100 µS/cm.

In embodiments, the concentrate has an electrical conductivity at 25°C between 10 and 200 µS/cm, between 10 and 250 µS/cm, between 10 and 200 µS/cm, between 10 and 75 µS/cm or between 10 and 50 µS/cm.

In a preferred embodiment, the concentrate is suitable to prepare the ready-to-use composition described hereinbefore by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the ready-to-use composition solely by addition of water and/or alcohol; preferably solely by addition of water, monoethylene glycol, monopropylene glycol, 1,3-propanediol and/or glycerol; most preferably solely by addition of water (i.e. no other ingredients need to be added in order to prepare the ready-to-use composition described herein from the concentrate).

In embodiments, the concentrate as defined herein is provided, wherein the concentration of the organophosphorus acid or the salt thereof is within the range of 0.0002 - 0.1 wt.%, by total weight of the concentrate, preferably 0.001 - 0.05 wt.%, more preferably 0.002 - 0.01 wt.%.

In preferred embodiments, the concentrate as defined herein is provided, wherein the concentration of the divalent metal cation is within the range of 0.0002 - 0.1 wt.%, by total weight of the concentrate, preferably 0.001 - 0.05 wt.%, more preferably 0.002 - 0.01 wt.%.

In a particular embodiment, the amount of divalent metal cation in the concentrate is controlled such that the molar ratio of divalent metal cation to organophosphorus acid is within the range of 0.01 - 100, preferably within the range 0.05 - 50, more preferably within the range of 0.1 - 10.

In preferred embodiments, the concentrate comprises the base fluid as defined herein, the divalent metal cation and the organophosphorus acid or salt thereof as defined herein, wherein the concentration of both the divalent metal cation and the organophosphorus acid or the salt thereof is more than 0.0004 wt.%, by total weight of the concentrate, preferably more than 0.002 wt.%, more preferably more than 0.004 wt.% and wherein more than 80 wt.%, preferably more than 85 wt.%, preferably more than 90 wt.% of the concentrate is an alcohol, preferably an alcohol selected from the group consisting of monoethylene glycol, monopropylene glycol, 1,3-propanediol and glycerol, most preferably monoethylene glycol.

In preferred embodiments, the concentrate comprises the base fluid as defined herein, the divalent metal cation and the organophosphorus acid or salt thereof as defined herein, wherein the concentration of both the divalent metal cation and the organophosphorus acid or salt thereof is more than 0.0004 wt.%, by total weight of the concentrate, preferably more than 0.002 wt.%, more preferably more than 0.004 wt.% and wherein more than 80 wt.%, preferably more than 85 wt.% of the concentrate is water.

### Methods of preparation

**A** second aspect of the invention concerns a method for preparing the heat-transfer fluid composition or the concentrate as defined herein, said method comprising the steps of:
(i) providing the base fluid as defined hereinbefore;
(ii) providing the organophosphorus acid or the salt thereof as defined hereinbefore;
(iii) providing a salt of the divalent metal cation as defined hereinbefore;
(iv) optionally providing one or more further additives as defined hereinbefore; and
(v) combining the base fluid of step (i) with the organophosphorus acid or the salt thereof of step (ii), the salt of the divalent metal cation of step (iii) and the optional one or more further additives of step (iv) to obtain the heat-transfer fluid composition or the concentrate.

In accordance with the invention, the order of addition of the compounds is not particularly limited.

In an embodiment, there is provided a method to prepare a ready-to-use composition as defined hereinbefore, comprising the steps of:
(i) providing a concentrate as defined hereinbefore;
(ii) providing water, alcohol or a mixture thereof;
(iii) optionally providing one or more further additives as defined hereinbefore; and
(iv) combining the concentrate of step (i) with the water, alcohol or a mixture thereof of step (ii) and the optional one or more further additives of step (iv) to obtain the ready-to-use composition.

In preferred embodiments, step (iv) comprises combining more than 20 wt.% water, by weight of the concentrate, alcohol or a mixture thereof, preferably more than 30 wt.%, or more than 50 wt.% water, alcohol or a mixture thereof.

In preferred embodiments, there is provided a method to prepare a ready-to-use composition as defined hereinbefore, consisting of the following steps:
(i) providing a concentrate as defined hereinbefore;
(ii) providing water, alcohol or a mixture thereof;
(iii) combining the concentrate of step (i) with the water, alcohol or a mixture thereof of step (ii) to obtain the ready-to-use composition.

In preferred embodiments, step (iii) comprises combining more than 50 wt.%, by weight of the concentrate, water, alcohol or a mixture thereof, preferably more than 100 wt.%, more than 150 wt.% more than 200 wt.% or more than 500 wt.% water, alcohol or a mixture thereof.

In accordance with the invention, the alcohol of step (ii) is preferably selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, preferably selected from the group consisting of monoethylene glycol, monopropylene glycol, 1,3-propanediol,glycerol and mixtures thereof; preferably from the group consisting of monoethylene glycol, monopropylene glycol, 1,3-propanediol and mixtures thereof.

### pH

In embodiments, the heat-transfer fluid composition, preferably the ready-to-use composition, as defined herein has a pH between 5 and 10, preferably between 6 and 9.5, more preferably between 7 and 9.

In embodiments, the pH of the heat-transfer fluid composition, preferably the ready-to-use composition, can be regulated through the use of a buffer. In preferred embodiments, the buffer system is established using any of the components as listed above, i.e. the organophosphorus acid or salt thereof, the divalent metal cation and/or the further additives.

### Uses/methods

Another aspect of the invention concerns an electrical system, preferably an electrical system selected from the group consisting of a solar system, a fuel cell, an electrical motor, a generator, a battery, a telephone transmission station, a radio and television broadcast station, a relay station, an electrical heating or cooling device, a charging station and a high powered laser/beamer, more preferably a battery, wherein the electrical system further comprises the heat-transfer fluid composition as defined herein, preferably the ready-to-use composition, as described herein. The electrical system preferably comprises aluminium in direct contact with the heat-transfer fluid composition or in direct contact with the ready-to-use composition as defined herein, more preferably an aluminium structure produced via Controlled Atmosphere Brazing (CAB) in direct contact with the heat-transfer fluid composition or in direct contact with the ready-to-use composition as defined herein.

Another aspect of the invention concerns the use of the combination of the organophosphorus acid or the salt thereof and the divalent metal cation as defined hereinbefore in a low electrical conductivity heat-transfer fluid composition comprising water and alcohol as electrical conductivity development inhibitor and/or corrosion inhibitor.

In a third aspect, the invention concerns the use of a heat-transfer fluid composition or ready-to-use composition as defined hereinbefore as a heat transfer fluid with electrical conductivity development inhibiting properties and/or corrosion inhibiting properties.

**A** fourth aspect concerns the use of the heat-transfer fluid composition as defined hereinbefore, preferably the ready-to-use composition as described hereinbefore, to inhibit the dissolution of fluoride, aluminium and potassium ions from the brazing flux of an aluminium structure produced via Controlled Atmosphere Brazing (CAB) into said heat-transfer fluid composition, preferably into said ready-to-use composition, and/or to maintain a low electrical conductivity in an electrical system comprising said heat-transfer fluid composition, preferably said ready-to-use composition, and an aluminium structure produced via Controlled Atmosphere Brazing (CAB).

Another aspect of the invention concerns the use of the heat-transfer fluid composition, preferably the ready-to-use composition, described hereinbefore as a heat-transfer fluid or heat-transfer fluid, preferably as a heat-transfer fluid or heat-transfer fluid in an electrical system, more preferably as a heat-transfer fluid or heat-transfer fluid in an electrical system selected from the group consisting of a solar system, a fuel cell, an electrical motor, a generator, a battery, a telephone transmission station, power electronics, a radio and television broadcast station, a relay station, an electrical heating or cooling device, preferably a battery.

In another aspect of the invention, there is provided a method of exchanging heat comprising:
a. generating heat in an electrical system, such as an electrical system comprising aluminium or an aluminium structure produced via Controlled Atmosphere Brazing (CAB), preferably an electrical system selected from the group consisting of a solar system, a fuel cell, an electrical motor, a generator, a battery, a telephone transmission station, power electronics, a radio and television broadcast station, a relay station, an electrical heating or cooling device, preferably a fuel cell or power electronics;
b. contacting a heat-transfer fluid composition as described herein, preferably a ready-to-use composition as described herein, with the electrical system of step a;
c. transferring heat from the system to the heat-transfer fluid composition;
d. passing the composition through a heat exchanger; and
e. transferring heat away from the heat-transfer fluid composition.

### EXAMPLES

The surprising behaviour of the heat-transfer fluid compositions in accordance with the invention, and specifically their stability as regards the electrical conductivity upon ageing, even in the of presence aluminium, such as an aluminium structure produced via Controlled Atmosphere Brazing (CAB), was demonstrated by immersion of an CAB brazed aluminium specimen (Radiator specimen, approximately 3 x 1 x 1 cm, cut from a radiator core manufactured through CAB brazing using Nocoloc^{®} brazing flux) in various compositions according to the invention or in comparative compositions, followed by ageing the composition for 7 days at 90 °C as described hereunder.

Seven concentrates (Concentrates 1-7) were prepared containing various divalent metal cations and 2-phosphonobutane-1,2,4-tricarboxylic acid (2-PBTC) as the organophosphorus acid in a high weight percentage of monoethylene glycol and using a small amount of ultrapure water (UPW). Additionally, two concentrates (Comparative Concentrates 8-9) were prepared as reference compositions, with Comparative Concentrate 8 containing no divalent metal cation and Comparative Concentrate 9 containing both no divalent metal cation and no organophosphorus acid. The formulation of each of the concentrates is presented in Table 1 along with the pH-values of the concentrates. TTZ (tolyltriazole), octanoic acid, triethanolamine and Dye Acid Green 25 were applied as further ingredients.

**Table 1: concentrate compositions, wt.% is calculated based on the total weight of the composition**

| Conc. | Type of divalent metal salt | Divalent metal salt (wt.%) | Divalent metal cation (wt.%) | UPW (wt.%) | Monoethylene glycol (wt.%) | 2-PBTC 50% in water (wt.%) | TTZ (wt.%) | Octanoic acid (wt.%) | Triethanola mine 85% in water (wt.%) | Dye Acid Green 25 Liquid (wt.%) | pH (-) |
|---|---|---|---|---|---|---|---|---|---|---|---|
| 1 | Strontium nitrate | 0.0140 | 0.0058 | 1.5000 | 97.7587 | 0.0090 | 0.0461 | 0.1000 | 0.5521 | 0.0200 | 7.9 |
| 2 | Strontium acetate | 0.0136 | 0.0058 | 1.5000 | 97.7591 | 0.0090 | 0.0461 | 0.1000 | 0.5521 | 0.0200 | 7.8 |
| 3 | Magnesium nitrate hexahydrate | 0.0170 | 0.0016 | 1.5000 | 97.7558 | 0.0090 | 0.0461 | 0.1000 | 0.5521 | 0.0200 | 7.7 |
| 4 | Magnesium acetate tetrahydrate | 0.0142 | 0.0016 | 1.5000 | 97.7586 | 0.0090 | 0.0461 | 0.1000 | 0.5521 | 0.0200 | 7.8 |
| 5 | Magnesium sulphate heptahydrate | 0.0163 | 0.0016 | 1.5000 | 97.7564 | 0.0090 | 0.0461 | 0.1000 | 0.5521 | 0.0200 | 7.8 |
| 6 | Calcium acetate monohydrate | 0.0117 | 0.0027 | 1.5000 | 97.7611 | 0.0090 | 0.0461 | 0.1000 | 0.5521 | 0.0200 | 7.8 |
| 7 | Calcium sulphate dihydrate | 0.0114 | 0.0027 | 1.5000 | 97.7614 | 0.0090 | 0.0461 | 0.1000 | 0.5521 | 0.0200 | 7.8 |
| 8 (Comp.) | / | / | | 0.5051 | 98.7603 | 0.0091 | 0.0466 | 0.1010 | 0.5577 | 0.0202 | 8.0 |
| 9 (Comp.) | / | / | | 1.5 | 97.7818 | / | 0.0461 | 0.1000 | 0.5521 | 0.0200 | 7.8 |

**Table 2: ready-to-use compositions**

| Ready-to-use composition | Before aging | | After aging | | | | | Change in eCond. (%) |
|---|---|---|---|---|---|---|---|---|
| | pH | eCond. at 25 °C (µS/cm) | pH | eCond. at 25 °C (µS/cm) | fluoride (ppm) | ICP Aluminium (ppm) | ICP Kalium (ppm) | |
| 1 | 8.1 | 98.0 | 8.0 | 129.8 | 21 | 5 | < 50 | 32 |
| 2 | 8.1 | 90.6 | 8.1 | 130.4 | 25 | 4.5 | < 50 | 44 |
| 3 | 8.2 | 97.3 | 8.0 | 155.4 | 33 | 6.7 | < 50 | 60 |
| 4 | 8.1 | 90.2 | 8.0 | 153.5 | 40 | 7.3 | < 50 | 70 |
| 5 | 8.1 | 93.8 | 8.0 | 159.8 | 35 | 7.2 | < 50 | 70 |
| 6 | 8.1 | 90.8 | 8.0 | 132.6 | 28 | 4.8 | < 50 | 46 |
| 7 | 8.1 | 93.2 | 8.0 | 141.3 | 26 | 5 | < 50 | 52 |
| 8 (Comp.) | 8.1 | 77.2 | 7.94 | 226.8 | 122 | 42 | 96 | 194 |
| 9 (Comp.) | 8.2 | 71.9 | 8.3 | 238.5 | 78 | 15 | 155 | 232 |

From these nine concentrates, ready-to-use compositions were made by diluting the concentrate with UPW until a 50v% solution was obtained. The pH and the electrical conductivity (eCond.) of the thus diluted compositions were measured (measurement 'before ageing') and are listed in Table 2.

Subsequently, CAB brazed aluminium specimens were added to 200 mL of the ready-to-use compositions 1-9. Subsequently, the bottles were placed in an oven at 90 °C. After 7 days, the bottles were taken out of the oven and the electrical conductivity and pH of the aged compositions was measured. The fluoride concentration in the aged compositions was determined by ion chromatography (Dionex ICS-6000 system equipped with an EG eluent generator and an AS11 column). The concentration of dissolved aluminium and dissolved potassium in the aged compositions was determined by inductive coupled plasma - optical emission spectroscopy (ICP-OES) equipment (Spectro ARCOS FHS12). Experimental results are provided in Table 2.

As can been seen from the above results, the compositions according to the invention (Ready-to-use Compositions 1-7) surprisingly and unexpectedly show that a low electrical conductivity can be maintained in the presence of metal, such as aluminium. Additionally, these results surprisingly and unexpectedly show that the presence of both a divalent metal cation and an organophosphorus acid lead to an improved compatibility with CAB brazed aluminium, due to a reduced leaching of fluoride, potassium and aluminium from the brazing flux into the heat-transfer fluid. Leaching of fluoride, potassium and aluminium ions from the brazing flux into the heat-transfer fluid is unwanted because it leads to an increase in electrical conductivity.

It was further concluded that Ready-to-use Compositions 1-7 showed no or only slight discoloration after aging at 90 °C for 7 days. Comparative Ready-to-use Compositions 8 and 9, on the other hand, showed increased discoloration and complete discoloration from blue to green, respectively. As will be appreciated by those skilled in the art, less or no discoloration means a more stable ready-to-use composition and a better protection of the aluminium.

The corrosion inhibiting properties of the heat-transfer fluid compositions in accordance to the invention were established via a glassware corrosion test and a hot surface corrosion test.

The glassware corrosion test was performed according to the ASTM D1384 standard test method on a ready-to-use composition made by diluting Concentrate 1 with UPW until a 33 v% solution was obtained. All other testing parameters were according to the ASTM D1384 standard test method. The results of the glassware corrosion test can be found in Table 3.

The hot surface corrosion test was performed according to the ASTM D4340 standard test method on a ready-to-use composition made by diluting Concentrate 1 with UPW until a 25 v% solution was obtained. All other testing parameters were according to the ASTM D4340 standard test method. The results of the glassware corrosion test can be found in Table 4.
These tests show that the ready-to-use heat transfer fluid compositions according to the invention have corrosion inhibiting properties for several metals and further confirm that the ready-to-use heat transfer fluid compositions according to the invention have and are able to maintain a low electrical conductivity.

**Table 3: glassware corrosion test**

| Glassware corrosion test (according to ASTM D1384) | | | |
|---|---|---|---|
| | 33 v% of Concentrate 1 | Limit | |
| Copper (UNS C11300) | 1.4 | 10 | mg/coup* |
| Brass (UNS C26000) | 3.7 | 10 | mg/coup* |
| Solder coated Brass (Grade 30A) | 1.1 | 30 | mg/coup* |
| Steel (UNS G10200) | -0.4 | 10 | mg/coup* |
| Cast iron (UNS F10007) | -0.6 | 10 | mg/coup* |
| Aluminium (UNS A23190) | -0.2 | 30 | mg/coup* |
| Electrical conductivity before test | 106 | | µS/cm |
| Electrical conductivity after test | 121 | | µS/cm |
| pH before test | 8.2 | | |
| pH after test | 8.1 | | |

| | | | |
|---|---|---|---|
| (* negative values equal weight gain; positive values equal weight loss) | | | |

**Table 4: Hot surface corrosion test**

| Hot surface corrosion test (According to ASTM D4340) | | | |
|---|---|---|---|
| | 25 v% of Concentrate 1 | Limit | |
| Aluminium (UNS A03190) | 0.02 | 1.0 | mg/cm²/week* |
| Electrical conductivity before test | 98 | | µS/cm |
| Electrical conductivity after test | 116 | | µS/cm |
| pH before test | 8.2 | | |
| pH after test | 8.1 | | |

| | | | |
|---|---|---|---|
| (* negative values equal weight gain; positive values equal weight loss) | | | |

The prior art composition of example 5 from US2017/009120A1 was reworked and the electrical conductivity was measured, as is shown in Tables 5 and 6.

**Table 5: Composition reproduced according to Example 5 of US2017/009120A1 by the applicant**

| | **Reproduction of Example 5 (**US2017/009120A1**) wt.%** |
|---|---|
| Ethylene Glycol | 93.56 |
| Sodium triazole 50% | 0.48 |
| Sodium hydroxide 50% | 2 |
| Neodecanoic acid | 0.86 |
| 2-ethyl hexanoic acid | 2.58 |
| H₃PO₄ 75% | 0.26 |
| Mg(Ac)₂.4H₂O (214,45) | 0.02 |
| DI H₂O | 0.02 |
| Poly(acrylic acid sodium salt) (C20-0044) Mw 2100* | 0.04 |
| Acumer 4161, Phosphino polycarboxylic acid M_{w} 3600 51% Solid, pH 3.3 | 0.02 |

| | |
|---|---|
| * US2017/009120A1 employed AR-940, sodium polyacrylate MW 2600 but as this was not available, with a view to reworking example 5 of US2017/009120A1 poly(acrylic acid sodium salt) (C20-0044) Mw 2100 was employed instead. | |

**Table 6: Electrical conductivity measurements according to the reproduction of Example 5 (US2017/009120A1)**

| **Measurement** | **Reproduction of Example 5 (**US2017/009120A1**)** |
|---|---|
| eConductivity as such (25°C) | 797 |
| eConductivity in 50 v/v % in DI water (25°C) | 2643 |
| pH as such | 8.9 |
| pH in 50 v/v % in DI water | 9.1 |

The prior art compositions of examples 4, 6 and 7 from US2014/061529A1 were reworked and the electrical conductivity was measured, as is shown in Tables 7 and 8.

**Table 7: Composition reproduced according to Example 4, 6 and 7 of US2014/061529**

| **Composition reproduced according to** US2014/061529A1 | US2014/061529 A1 **Example 4** | US2014/061529 A1 **Example 6** | US2014/061529 A1 **Example 7** |
|---|---|---|---|
| Ethylene Glycol | 94.0609 | 94.0632 | 94.0009 |
| 2-ethyl hexanoic acid | 3.24 | 3.24 | 3.24 |
| Sebacic acid | 0.252 | 0.252 | 0.252 |
| Tolyltriazole | 0.2 | 0.2 | 0.2 |
| Sodium hydroxide 50% | 2 | 2 | 2 |
| NaNO₂ | 0.165 | 0.165 | 0.165 |
| SrNO₃² | 0.06 | 0.06 | 0.06 |
| Phenylphosphonic acid | 0.0221 | 0 | 0.0221 |
| Phenylphosphinic acid | 0 | 0.0198 | 0 |
| Sodium molybdate dihydrate | 0 | 0 | 0.06 |

**Table 8: Electrical conductivity measurements according to the reproduction of the Examples in US2014/061529A1**

| **Measurement** | **Example 4** | **Example 6** | **Example 7** |
|---|---|---|---|
| eConductivity as such (25°C) | 893 | 995 | 961 |
| eConductivity in 50 v/v % in DI water (25°C) | 2930 | 2987 | 3035 |
| pH as such | 7.6 | 7.8 | 7.9 |
| pH in 50 v/v % in DI water | 7.3 | 7.6 | 7.7 |

## Claims

1. A heat-transfer fluid composition comprising a base fluid, a divalent metal cation and an organophosphorus acid or a salt thereof,
wherein the composition has an electrical conductivity at 25 °C of less than 500 µS/cm, wherein the base fluid consists of water and alcohol,
wherein the alcohol is present in an amount in the range of 10-99.5 wt.% by weight of the base fluid, and
wherein the composition comprises more than 75 wt.% of the base fluid by total weight of the composition.

2. The heat-transfer fluid composition according to claim 1, additionally comprising one or more corrosion inhibitors, preferably the one or more corrosion inhibitors are selected from the group consisting of silicates, phosphates, organic acids, thiazoles, triazoles, molybdates, nitrates and amines, more preferably selected from the group consisting of organic acids, triazoles and amines.

3. The heat-transfer fluid composition according to any one of claims 1-2, wherein the composition has an electrical conductivity at 25 °C of less than 350 µS/cm, preferably less than 250 µS/cm, more preferably less than 225 µS/cm, even preferably less than 200 µS/cm, yet more preferably less than 175 µS/cm, still more preferably less than 150 µS/cm.

4. The heat-transfer fluid composition according to any one of claims 1-3, wherein the alcohol is selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, preferably selected from the group consisting of monoethylene glycol, monopropylene glycol, 1,3-propanediol, glycerol and mixtures thereof.

5. The heat-transfer fluid composition according to any one of claims 1-4, wherein the divalent metal cation is selected from the group consisting of earth alkali metals and combinations thereof, preferably a divalent metal cation selected from the group consisting of divalent calcium, magnesium and strontium cations and combinations thereof, more preferably the divalent metal cation is a divalent strontium cation.

6. The heat-transfer fluid composition according to any one of claims 1-5, further comprising an anion chosen from the group consisting of sulphate, nitrate, acetate and a combination thereof.

7. The heat-transfer fluid composition according to any one of claims 1-6, wherein the organophosphorus acid has the general formula (I): 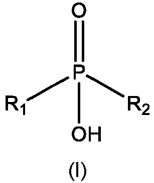
wherein R₁ is either an alkoxy chain, a hydroxyl group, an alkyl chain, an aryloxy group or an aryl group,
wherein R₂ is an alkyl chain or an aryl group, and
wherein the alkoxy chain, the alkyl chain, the aryloxy group and the aryl group can be independently substituted with one or more of hydroxyl group, amine group, phosphonic acid group or a salt thereof and carboxylic acid group or a salt thereof.

8. The heat-transfer fluid composition according to claim 7, wherein the organophosphorus acid according to formula (I) is either an organophosphonic acid or an organophosphinic acid,
wherein in the case of organophosphonic acid, R₁ is either an alkoxy chain, an aryloxy group or a hydroxyl group and R₂ is an alkyl chain or an aryl group, and
wherein in the case of organophosphinic acid, both R₁ and R₂ are independently chosen from alkyl chains and aryl groups,
wherein the alkoxy chain, the alkyl chain, the aryloxy group and the aryl group can be independently substituted with one or more of hydroxyl group, amine group, phosphonic acid group or a salt thereof and carboxylic acid group or a salt thereof.

9. The heat-transfer fluid composition according to any one of claims 1-8, wherein the organophosphorus acid is either an organophosphonic acid or an organophosphinic acid according to formula (C) below, wherein n = 1 - 10, preferably n = 1 - 5, and wherein alkyl C1-C10 is straight or branched alkyl:

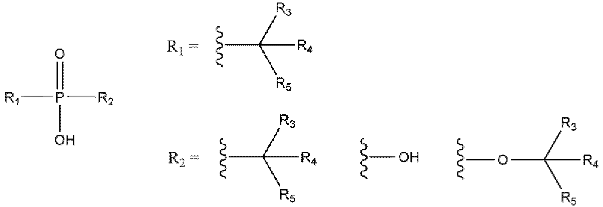

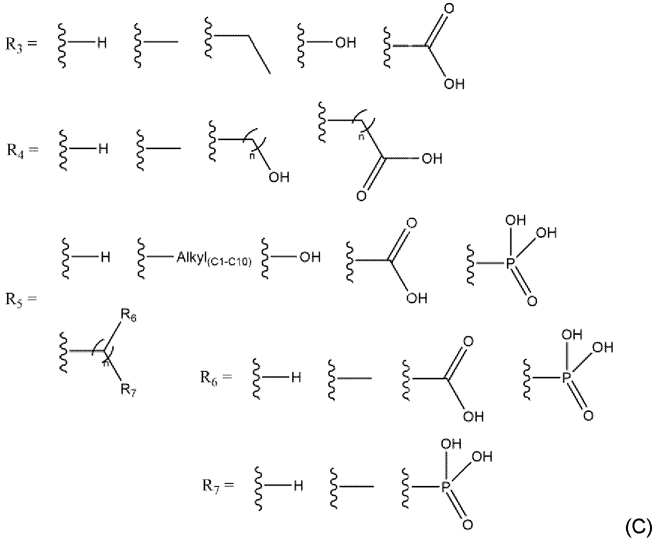

10. The heat-transfer fluid composition according to any one of claims 1-8, wherein the organophosphorus acid is an organophosphonic acid according to formula (D) below, wherein n = 1 - 10, wherein m = 1 - 5 and wherein alkyl C1-C10 is straight or branched alkyl:

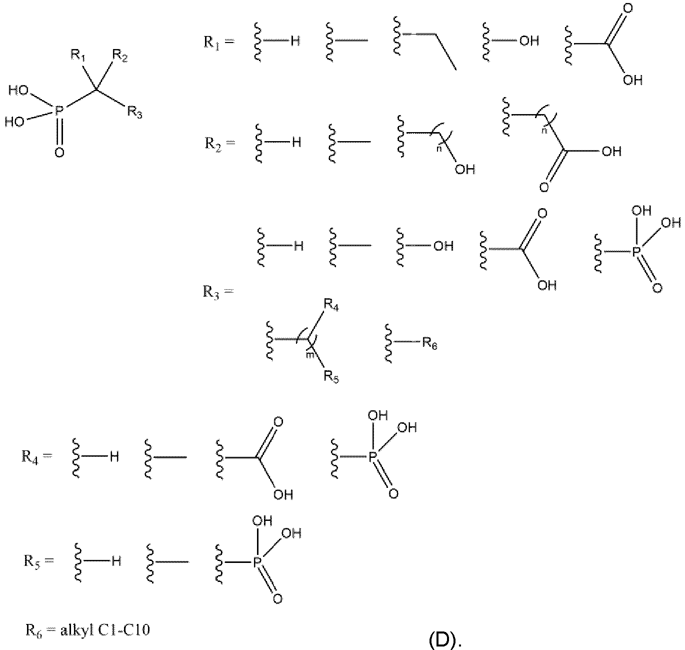

11. The heat-transfer fluid composition according to any one of claims 1-8, wherein the organophosphorus acid is an organophosphinic acid according to formula (E) below, wherein n = 1 - 10, wherein m = 1 - 5 and wherein alkyl C1-C10 is straight or branched alkyl:

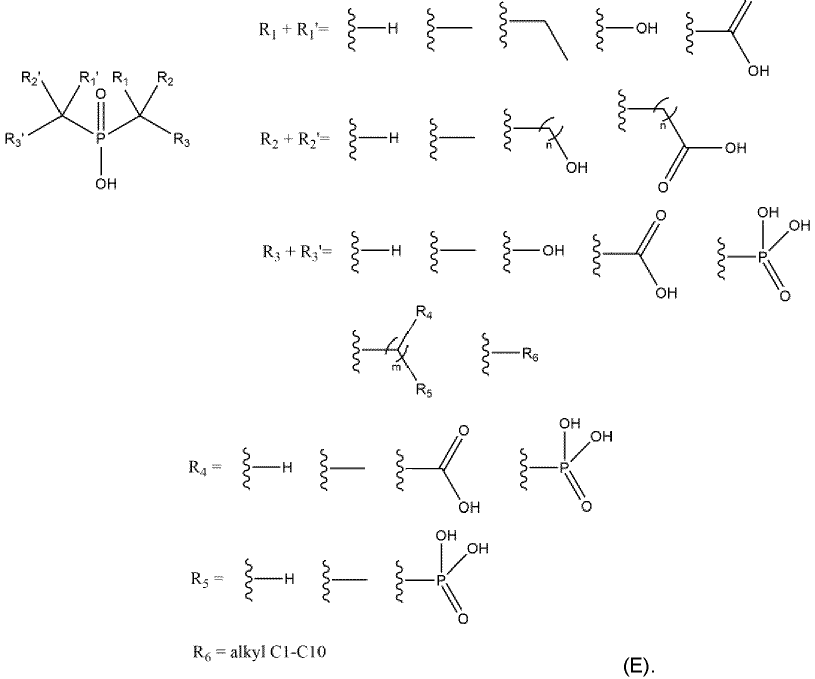

12. The heat-transfer fluid composition according to any one of claims 1-11, which is provided in the form of a ready-to-use composition,
wherein the concentration of the organophosphorus acid or the salt thereof is within the range of 0.0001 - 0.05 wt.%, by total weight of the ready-to-use composition, preferably within the range of 0.0005 - 0.025 wt.%, more preferably within the range of 0.001 - 0.005 wt.%,
wherein the concentration of the divalent metal cation is within the range of 0.0001 - 0.05 wt.%, by total weight of the ready-to-use composition, preferably within the range of 0.0005 - 0.025 wt.%, more preferably within the range of 0.001 - 0.005 wt.%; and
wherein the ready-to-use composition comprises more than 90 wt.%, by total weight of the ready-to-use composition, preferably more than 95 wt.%, preferably more than 98 wt.%, preferably more than 98.5 wt.% of the base fluid.

13. The heat-transfer fluid composition according to claim 12 , wherein the base fluid consists of water and an alcohol selected from the group consisting of monoethylene glycol, monopropylene glycol, 1,3-propanediol, glycerol and mixtures thereof, wherein the alcohol is present in an amount in the range of 30-70 wt.% by weight of the base fluid.

14. The heat-transfer fluid composition according to any one of claims 1-11, which is provided in the form of a concentrate suitable to prepare the ready-to-use composition according to any one of claims 14-16 solely by addition of water and/or alcohol; preferably solely by addition of water, monoethylene glycol, monopropylene glycol, 1,3-propanediol and/or glycerol; most preferably solely by addition of water.

15. A method for preparing the heat-transfer fluid composition according to any one of claims 1-11, comprising the steps of:
(i) providing the base fluid;
(ii) providing the organophosphorus acid or the salt thereof;
(iii) providing a salt of the divalent metal cation;
(iv) optionally providing one or more further additives; and
(v) combining the base fluid of step (i) with the organophosphorus acid or the salt thereof of step (ii), the salt of the divalent metal cation of step (iii) and the optional one or more further additives of step (iv) to obtain the composition.

16. Use of a heat-transfer fluid composition according to any one of claims 1-14 as a heat transfer fluid with electrical conductivity development inhibiting properties and/or corrosion inhibiting properties.

17. Use of a heat-transfer fluid composition according to any one of claims 1-14, to inhibit the dissolution of fluoride, aluminium and potassium ions from the brazing flux of an aluminium structure produced via Controlled Atmosphere Brazing (CAB) into said composition, and/or to maintain a low electrical conductivity in an electrical system comprising said composition and an aluminium structure produced via Controlled Atmosphere Brazing (CAB).

## Patentansprüche

1. Wärmeträgerflüssigkeitszusammensetzung, die eine Basisflüssigkeit, ein zweiwertiges Metallkation und eine Organophosphorsäure oder ein Salz davon umfasst,
wobei die Zusammensetzung bei 25 °C eine elektrische Leitfähigkeit von weniger als 500 µS/cm aufweist,
wobei die Basisflüssigkeit aus Wasser und Alkohol besteht,
wobei der Alkohol in einer Menge im Bereich von 10-99,5 Gew.-%, bezogen auf das Gewicht der Basisflüssigkeit, vorhanden ist, und
wobei die Zusammensetzung mehr als 75 Gew.-% der Basisflüssigkeit, bezogen auf das Gesamtgewicht der Zusammensetzung, umfasst.

2. Wärmeträgerflüssigkeitszusammensetzung nach Anspruch 1, die zusätzlich einen oder mehrere Korrosionsinhibitoren umfasst, wobei der eine oder die mehreren Korrosionsinhibitoren vorzugsweise aus der Gruppe ausgewählt sind, die aus Silikaten, Phosphaten, organischen Säuren, Thiazolen, Triazolen, Molybdaten, Nitraten und Aminen besteht, wobei sie vorzugsweise aus der Gruppe ausgewählt sind, die aus organischen Säuren, Triazolen und Aminen besteht.

3. Wärmeträgerflüssigkeitszusammensetzung nach einem der Ansprüche 1-2, wobei die Zusammensetzung bei 25 °C eine elektrische Leitfähigkeit von weniger als 350 µS/cm, vorzugsweise weniger als 250 µS/cm, bevorzugter weniger als 225 µS/cm, noch bevorzugter weniger als 200 µS/cm, besonders bevorzugt weniger als 175 µS/cm, noch bevorzugter weniger als 150 µS/cm aufweist.

4. Wärmeträgerflüssigkeitszusammensetzung nach einem der Ansprüche 1-3, wobei der Alkohol aus der Gruppe ausgewählt ist, die aus Monoethylenglykol, Diethylenglykol, Triethylenglykol, Tetraethylenglykol, Pentaethylenglykol, Hexaethylenglykol, Monopropylenglykol, 1,3-Propandiol, Dipropylenglykol, Tripropylenglykol, Tetrapropylenglykol, Pentapropylenglykol, Hexapropylenglykol, Methanol, Ethanol, Propanol, Butanol, Tetrahydrofurfuryl, ethoxyliertem Furfuryl, Dimethylether von Glycerin, Sorbit, 1,2,6-Hexantriol, Trimethylolpropan, Methoxyethanol, Glycerin und Mischungen davon besteht, wobei er vorzugsweise aus der Gruppe ausgewählt ist, die aus Monoethylenglykol, Monopropylenglykol, 1,3-Propandiol, Glycerin und Mischungen davon besteht.

5. Wärmeträgerflüssigkeitszusammensetzung nach einem der Ansprüche 1-4, wobei das zweiwertige Metallkation aus der Gruppe ausgewählt ist, die aus Erdalkalimetallen und Kombinationen davon ausgewählt ist, vorzugsweise ein zweiwertiges Metallkation, das aus der Gruppe ausgewählt ist, die aus zweiwertigen Kalzium-, Magnesium- und Strontiumkationen und Kombinationen davon besteht, wobei das zweiwertige Metallkation besonders bevorzugt ein zweiwertiges Strontiumkation ist.

6. Wärmeträgerflüssigkeitszusammensetzung nach einem der Ansprüche 1-5, die ferner ein Anion umfasst, das aus der Gruppe ausgewählt ist, die aus Sulfat, Nitrat, Acetat und einer Kombination davon besteht.

7. Wärmeträgerflüssigkeitszusammensetzung nach einem der Ansprüche 1-6, wobei die Organophosphorsäure die allgemeine Formel (I) aufweist: 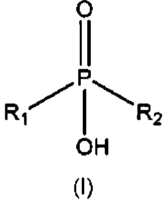
wobei R₁ entweder eine Alkoxykette, eine Hydroxylgruppe, eine Alkylkette, eine Aryloxygruppe oder eine Arylgruppe ist,
wobei R₂ eine Alkylkette oder eine Arylgruppe ist, und
wobei die Alkoxykette, die Alkylkette, die Aryloxygruppe und die Arylgruppe unabhängig voneinander mit einer oder mehreren von folgenden Gruppen substituiert sein können: Hydroxylgruppe, Amingruppe, Phosphonsäuregruppe oder ein Salz davon und/oder Karbonsäuregruppe oder ein Salz davon.

8. Wärmeträgerflüssigkeitszusammensetzung nach Anspruch 7, wobei die Organophosphorsäure nach Formel (I) entweder eine Organophosphonsäure oder eine Organophosphinsäure ist,
wobei, im Fall von Organophosphonsäure, R₁ entweder eine Alkoxykette, eine Aryloxygruppe oder eine Hydroxylgruppe ist und R₂ eine Alkylkette oder eine Arylgruppe ist, und
wobei, im Fall von Organophosphinsäure, sowohl R₁ als auch R₂ unabhängig voneinander aus Alkylketten und Arylgruppen ausgewählt werden,
wobei die Alkoxykette, die Alkylkette, die Aryloxygruppe und die Arylgruppe unabhängig voneinander mit einer oder mehreren von folgenden Gruppen substituiert sein können: Hydroxylgruppe, Amingruppe, Phosphonsäuregruppe oder ein Salz davon und/oder Karbonsäuregruppe oder ein Salz davon.

9. Wärmeträgerflüssigkeitszusammensetzung nach einem der Ansprüche 1-8, wobei die Organophosphorsäure entweder eine Organophosphonsäure oder eine Organophosphinsäure nach der nachstehenden Formel (C) ist, wobei n = 1 - 10, vorzugsweise n = 1 - 5, und wobei C₁-C₁₀-Alkyl ein geradkettiges oder verzweigtes Alkyl ist:

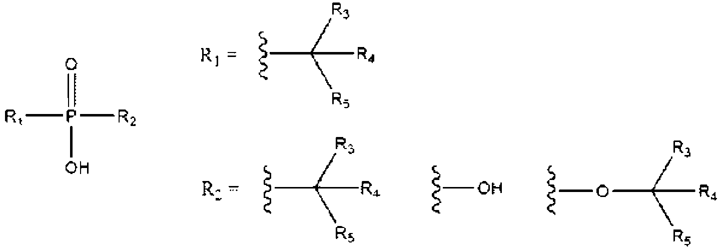

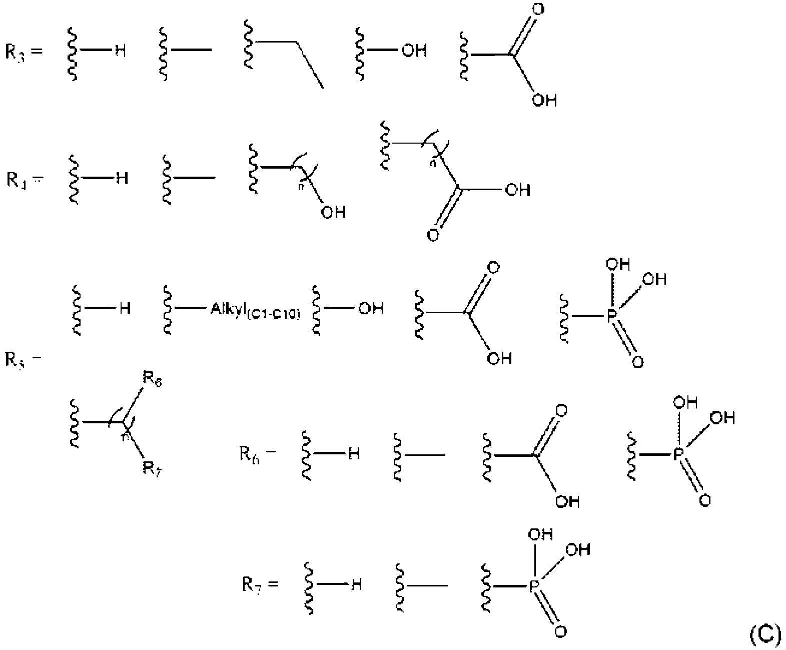

10. Wärmeträgerflüssigkeitszusammensetzung nach einem der Ansprüche 1-8, wobei die Organophosphorsäure eine Organophosphonsäure nach der nachstehenden Formel (D) ist, wobei n = 1 - 10, wobei m = 1 - 5 und wobei C₁-C₁₀-Alkyl ein geradkettiges oder verzweigtes Alkyl ist:

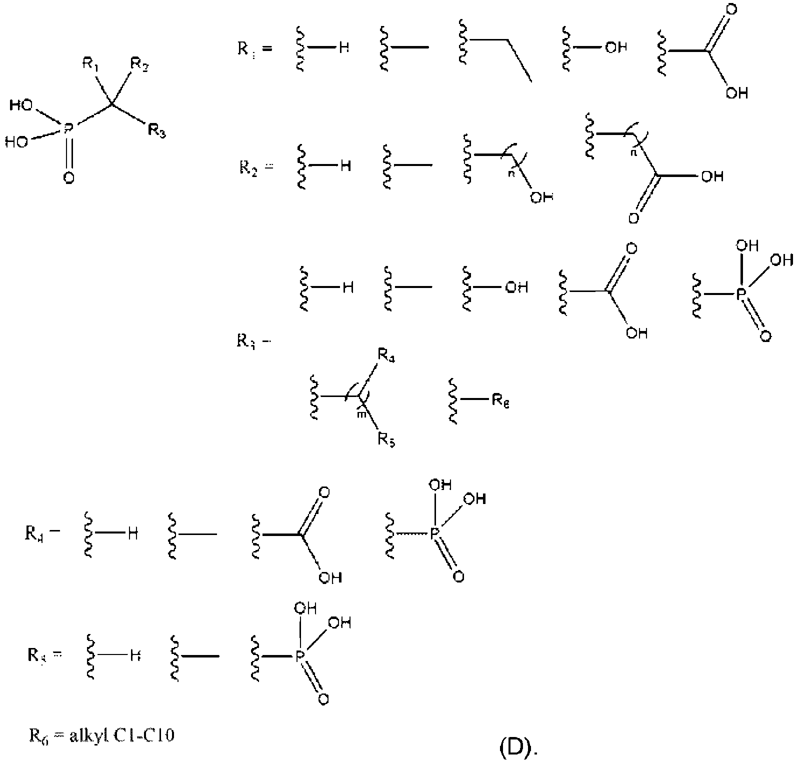

11. Wärmeträgerflüssigkeitszusammensetzung nach einem der Ansprüche 1-8, wobei die Organophosphorsäure eine Organophosphinsäure nach der nachstehenden Formel (E) ist, wobei n = 1 - 10, wobei m = 1 - 5 und wobei C₁-C₁₀-Alkyl ein geradkettiges oder verzweigtes Alkyl ist:

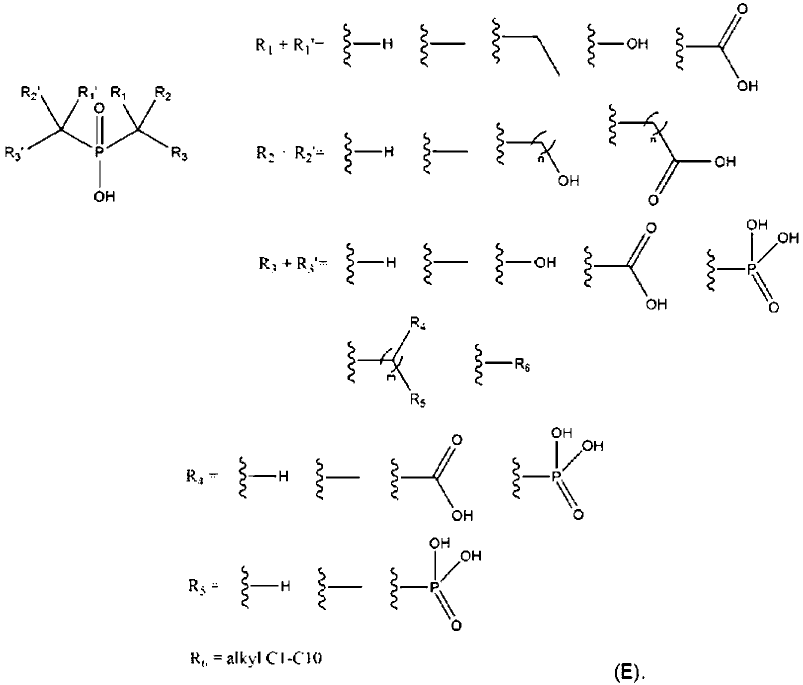

12. Wärmeträgerflüssigkeitszusammensetzung nach einem der Ansprüche 1-11, die in Form einer gebrauchsfertigen Zusammensetzung bereitgestellt wird,
wobei die Konzentration der Organophosphorsäure oder des Salzes davon im Bereich von 0,0001 - 0,05 Gew.-% liegt, bezogen auf das Gesamtgewicht der gebrauchsfertigen Zusammensetzung, vorzugsweise im Bereich von 0,0005 - 0,025 Gew.-%, bevorzugter im Bereich von 0,001 - 0,005 Gew.-%,
wobei die Konzentration des zweiwertigen Metallkations im Bereich von 0,0001 - 0,05 Gew.-% liegt, bezogen auf das Gesamtgewicht der gebrauchsfertigen Zusammensetzung, vorzugsweise im Bereich von 0,0005 - 0,025 Gew.-%, bevorzugter im Bereich von 0,001 - 0,005 Gew.-%; und
wobei die gebrauchsfertige Zusammensetzung mehr als 90 Gew.-% umfasst, bezogen auf das Gesamtgewicht der gebrauchsfertigen Zusammensetzung, vorzugsweise mehr als 95 Gew.-%, bevorzugter mehr als 98 Gew.-%, bevorzugter mehr als 98,5 Gew.-% der Basisflüssigkeit.

13. Wärmeträgerflüssigkeitszusammensetzung nach Anspruch 12, wobei die Basisflüssigkeit aus Wasser und einem Alkohol besteht, der aus der Gruppe ausgewählt ist, die aus Monoethylenglykol, Monopropylenglykol, 1,3-Propandiol, Glycerin und Mischungen davon besteht, wobei der Alkohol in einer Menge im Bereich von 30-70 Gew.-%, bezogen auf das Gewicht der Basisflüssigkeit, vorhanden ist.

14. Wärmeträgerflüssigkeitszusammensetzung nach einem der Ansprüche 1-11, die in Form eines Konzentrats bereitgestellt wird, das geeignet ist, die gebrauchsfertige Zusammensetzung nach einem der Ansprüche 14-16 ausschließlich durch Zugabe von Wasser und/oder Alkohol herzustellen; vorzugsweise ausschließlich durch Zugabe von Wasser, Monoethylenglykol, Monopropylenglykol, 1,3-Propandiol und/oder Glycerin; am bevorzugtesten ausschließlich durch Zugabe von Wasser.

15. Verfahren zum Herstellen der Wärmeträgerflüssigkeitszusammensetzung nach einem der Ansprüche 1-11, das die folgenden Schritte umfasst:
(i) Bereitstellen der Basisflüssigkeit;
(ii) Bereitstellen der Organophosphorsäure oder des Salzes davon;
(iii) Bereitstellen eines Salzes des zweiwertigen Metallkations;
(iv) optional Bereitstellen eines oder mehrerer weiterer Zusatzstoffe; und
(v) Kombinieren der Basisflüssigkeit aus Schritt (i) mit der Organophosphorsäure oder des Salzes davon aus Schritt (ii), dem Salz des zweiwertigen Metallkations aus Schritt (iii) und optional dem einen oder den mehreren weiteren Zusatzstoffen aus Schritt (iv), um die Zusammensetzung zu erhalten.

16. Verwendung einer Wärmeträgerflüssigkeitszusammensetzung nach einem der Ansprüche 1-14 als Wärmeträgerflüssigkeit mit Eigenschaften zur Hemmung der Entwicklung elektrischer Leitfähigkeit und/oder Eigenschaften zur Hemmung von Korrosion.

17. Verwendung einer Wärmeträgerflüssigkeitszusammensetzung nach einem der Ansprüche 1-14 zur Hemmung der Auflösung von Fluorid-, Aluminium- und Kaliumionen aus dem Lötflussmittel einer durch Löten in kontrollierten Atmosphären (CAB) hergestellten Aluminiumstruktur in die besagte Zusammensetzung, und/oder zum Aufrechterhalten einer niedrigen elektrischen Leitfähigkeit in einem elektrischen System, das die besagte Zusammensetzung und eine durch Löten in kontrollierten Atmosphären (CAB) hergestellte Aluminiumstruktur umfasst.

## Revendications

1. Composition de fluide de transfert de chaleur comprenant un fluide de base, un cation métallique divalent et un acide organophosphoré ou un sel de celui-ci, où la composition a une conductivité électrique à 25 °C de moins de 500 µS/cm, où le fluide de base est constitué d'eau et d'alcool,
où l'alcool est présent en une quantité dans la plage de 10 à 99,5 % en poids en poids du fluide de base, et
où la composition comprend plus de 75 % en poids du fluide de base par rapport au poids total de la composition.

2. Composition de fluide de transfert de chaleur selon la revendication 1, comprenant en outre un ou plusieurs inhibiteurs de corrosion, préférablement l'un ou plusieurs inhibiteurs de corrosion sont choisis dans le groupe constitué par les silicates, les phosphates, les acides organiques, les thiazoles, les triazoles, les molybdates, les nitrates et les amines, plus préférablement choisis dans le groupe constitué par les acides organiques, les triazoles et les amines.

3. Composition de fluide de transfert de chaleur selon l'une quelconque des revendications 1 à 2, où la composition a une conductivité électrique à 25 °C de moins de 350 µS/cm, préférablement de moins de 250 µS/cm, plus préférablement de moins de 225 µS/cm, encore préférablement de moins de 200 µS/cm, encore plus préférablement de moins de 175 µS/cm, et toujours plus préférablement de moins de 150 µS/cm.

4. Composition de fluide de transfert de chaleur selon l'une quelconque des revendications 1 à 3, où l'alcool est choisi dans le groupe constitué par le monoéthylène glycol, le diéthylène glycol, le triéthylène glycol, le tétraéthylène glycol, le pentaéthylène glycol, l'hexaéthylène glycol, le monopropylène glycol, 1,3-propanediol, le dipropylène glycol, le tripropylène glycol, le tétrapropylène glycol, le pentapropylène glycol, l'hexapropylène glycol, le méthanol, l'éthanol, le propanol, le butanol, le tétrahydrofurfuryle, le furfuryle éthoxylé, le diméthyléther de glycérol, le sorbitol, le 1,2,6-hexanetriol, le triméthylolpropane, le méthoxyéthanol, le glycérol et les mélanges de ceux-ci, préférablement choisis dans le groupe constitué par le monoéthylène glycol, le monopropylène glycol, le 1,3-propanediol, le glycérol et les mélanges de ceux-ci.

5. Composition de fluide de transfert de chaleur selon l'une quelconque des revendications 1 à 4, où le cation métallique divalent est choisi dans le groupe constitué par les métaux alcalino-terreux et les combinaisons de ceux-ci, préférablement un cation métallique divalent choisi dans le groupe constitué par les cations divalents de calcium, de magnésium et de strontium et les combinaisons de ceux-ci, plus préférablement, le cation métallique divalent est un cation divalent de strontium.

6. Composition de fluide de transfert de chaleur selon l'une quelconque des revendications 1 à 5, comprenant en outre un anion choisi dans le groupe constitué par le sulfate, le nitrate, l'acétate et une combinaison de ceux-ci.

7. Composition de fluide de transfert de chaleur selon l'une quelconque des revendications 1 à 6, où l'acide organophosphoré a la formule générale (I) : 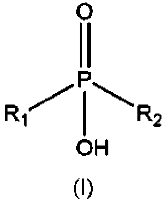
où R₁ est soit une chaîne alcoxy, un groupe hydroxyle, une chaîne alkyle, un groupe aryloxy ou un groupe aryle,
où R₂ est une chaîne alkyle ou un groupe aryle, et
où la chaîne alcoxy, la chaîne alkyle, le groupe aryloxy et le groupe aryle peuvent être indépendamment substitués par un ou plusieurs parmi un groupe hydroxyle, un groupe amine, un groupe acide phosphonique ou un sel de celui-ci et un groupe acide carboxylique ou un sel de celui-ci.

8. Composition de fluide de transfert de chaleur selon la revendication 7, où l'acide organophosphoré selon la formule (I) est soit un acide organophosphonique, soit un acide organophosphinique,
où, dans le cas d'un acide organophosphonique, R₁ est soit une chaîne alcoxy, un groupe aryloxy ou un groupe hydroxyle, et R₂ est une chaîne alkyle ou un groupe aryle, et
où, dans le cas de l'acide organophosphinique, R₁ et R₂ sont tous deux choisis indépendamment parmi des chaînes alkyle et des groupes aryle,
où la chaîne alcoxy, la chaîne alkyle, le groupe aryloxy et le groupe aryle peuvent être substitués indépendamment par un ou plusieurs parmi un groupe hydroxyle, un groupe amine, un groupe acide phosphonique ou un sel de celui-ci et un groupe acide carboxylique ou un sel de celui-ci.

9. Composition de fluide de transfert de chaleur selon l'une quelconque des revendications 1 à 8, où l'acide organophosphoré est soit un acide organophosphonique, soit un acide organophosphinique selon la formule (C) ci-dessous, où n = 1 à 10, préférablement n = 1 à 5, et où l'alkyle C1-C10 est un alkyle linéaire ou ramifié :

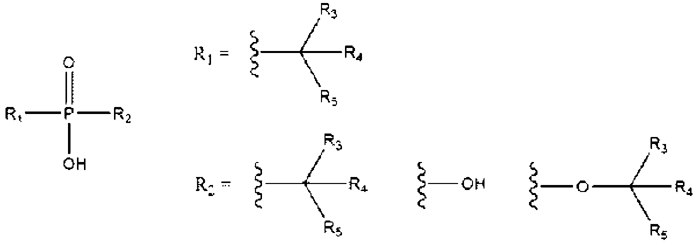

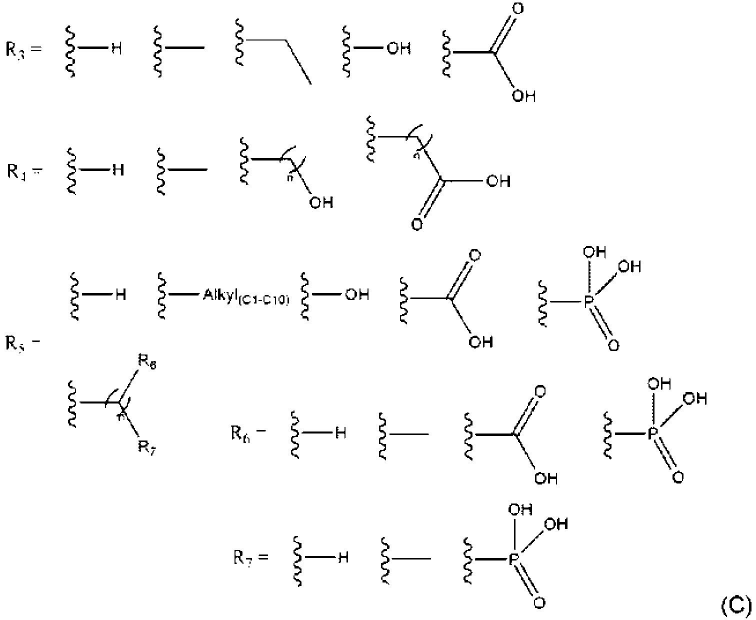

10. Composition de fluide de transfert de chaleur selon l'une quelconque des revendications 1 à 8, où l'acide organophosphoré est un acide organophosphonique selon la formule (D) ci-dessous, où n = 1 à 10, où m = 1 à 5 et où l'alkyle C1-C10 est un alkyle linéaire ou ramifié :

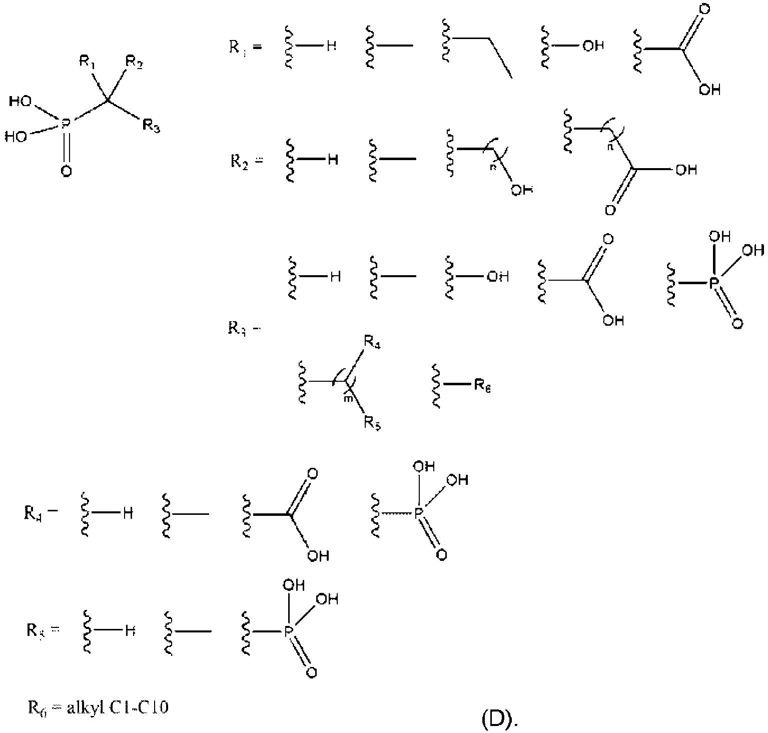

11. Composition de fluide de transfert de chaleur selon l'une quelconque des revendications 1 à 8, où l'acide organophosphoré est un acide organophosphinique selon la formule (E) ci-dessous, où n = 1 à 10, où m = 1 à 5 et où le groupe alkyle C1-C10 est un groupe alkyle linéaire ou ramifié :

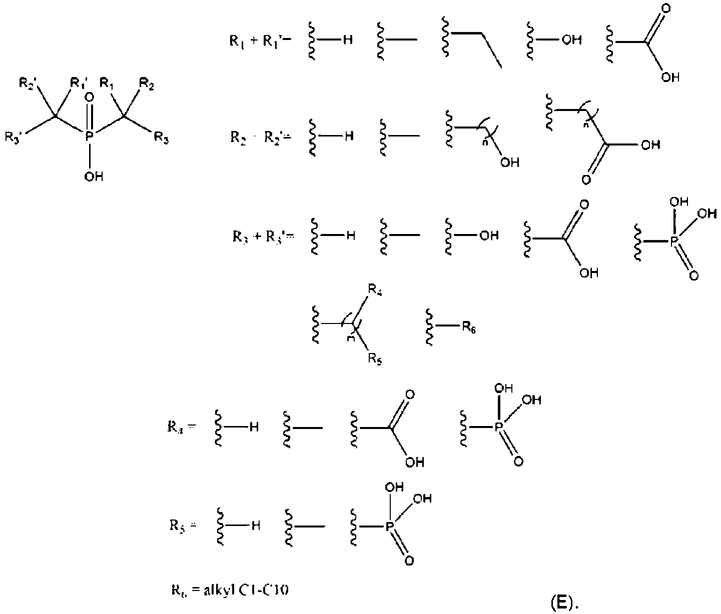

12. Composition de fluide de transfert de chaleur selon l'une quelconque des revendications 1 à 11, qui est fournie sous la forme d'une composition prête à l'emploi,
où la concentration de l'acide organophosphoré ou du sel de celui-ci est comprise dans la plage de 0,0001 à 0,05 % en poids, par rapport au poids total de la composition prête à l'emploi, préférablement comprise dans la plage de 0,0005 à 0,025 % en poids, plus préférablement comprise dans la plage de 0,001 à 0,005 % en poids,
où la concentration du cation métallique divalent est comprise dans la plage de 0,0001 à 0,05 % en poids, par rapport au poids total de la composition prête à l'emploi, préférablement dans la plage de 0,0005 à 0,025 % en poids, plus préférablement dans la plage de 0,001 à 0,005 % en poids ; et
où la composition prête à l'emploi comprend plus de 90 % en poids, par rapport au poids total de la composition prête à l'emploi, préférablement plus de 95 % en poids, préférablement plus de 98 % en poids, préférablement plus de 98,5 % en poids du fluide de base.

13. Composition de fluide de transfert de chaleur selon la revendication 12, où le fluide de base est constitué d'eau et d'un alcool choisi dans le groupe constitué par le monoéthylène glycol, le monopropylène glycol, le 1,3-propanediol, le glycérol et les mélanges de ceux-ci, où l'alcool est présent en une quantité située dans la plage de 30 à 70 % en poids du fluide de base.

14. Composition de fluide de transfert de chaleur selon l'une quelconque des revendications 1 à 11, qui est fournie sous la forme d'un concentré adapté à la préparation de la composition prête à l'emploi selon l'une quelconque des revendications 14 à 16 uniquement par addition d'eau et/ou d'alcool ; préférablement uniquement par addition d'eau, de monoéthylène glycol, de monopropylène glycol, de 1,3-propanediol et/ou de glycérol ; le plus préférablement uniquement par addition d'eau.

15. Procédé de préparation de la composition de fluide de transfert de chaleur selon l'une quelconque des revendications 1 à 11, comprenant les étapes suivantes :
(i) fournir le fluide de base ;
(ii) fournir l'acide organophosphoré ou le sel de celui-ci ;
(iii) fournir un sel du cation métallique divalent ;
(iv) fournir éventuellement un ou plusieurs additifs supplémentaires ; et
(v) combiner le fluide de base de l'étape (i) avec l'acide organophosphoré ou le sel de celui-ci de l'étape (ii), le sel du cation métallique divalent de l'étape (iii) et l'un ou plusieurs additifs supplémentaires facultatifs de l'étape (iv) pour obtenir la composition.

16. Utilisation d'une composition de fluide de transfert de chaleur selon l'une quelconque des revendications 1 à 14 comme un fluide de transfert de chaleur ayant des propriétés inhibant le développement de la conductivité électrique et/ou des propriétés inhibant la corrosion.

17. Utilisation d'une composition de fluide de transfert de chaleur selon l'une quelconque des revendications 1 à 14, pour inhiber la dissolution des ions fluorure, aluminium et potassium provenant du flux de brasage d'une structure en aluminium produite par brasage sous atmosphère contrôlée (CAB) dans ladite composition, et/ou pour maintenir une faible conductivité électrique dans un système électrique comprenant ladite composition et une structure en aluminium produite par brasage sous atmosphère contrôlée (CAB).
